# EUROPEAN PATENT SPECIFICATION

(11) **EP 4 022 000 B1**
(45) Date of publication and mention of the grant of the patent: **11.10.2023**
(21) Application number: 20758232.1
(22) Date of filing: 24.08.2020
(51) Int. Cl.: C09D 181/00, C09D 5/00, C09D 7/63, B05D 1/02, B05D 7/00

(54) **COATING COMPOSITION CURABLE BY THIO-MICHAEL ADDITION**
DURCH THIO-MICHAEL-ADDITION HÄRTBARE BESCHICHTUNGSZUSAMMENSETZUNG
COMPOSITION DE REVÊTEMENT DURCISSABLE PAR ADDITION THIO-MICHAEL

(30) Priority: 29.08.2019 EP 19194419
(43) Date of publication of application: 06.07.2022
(73) Proprietor: BASF Coatings GmbH, 48165 Münster (DE)
(72) Inventor: MITTAG, Friederike, 48165 Münster (DE); VOLLMANN, Dominik, 48165 Münster (DE); HOFFMANN, Peter, 48165 Münster (DE); LEVENT, Emre, 59348 Seppenrade (DE); FECHTNER, Katharina, 48165 Münster (DE); NIEMEIER, Manuela, 48165 Münster (DE)
(74) Representative: BASF IP Association
(86) International application number: PCT/EP2020/073615
(87) International publication number: WO 2021/037791

(56) References cited:
- EP-A1- 1 593 727
- US-A1- 2009 047 443
- US-A1- 2009 047 546
- US-A1- 2015 252 232

## Description

The present invention relates to a curable coating composition comprising at least one Michael donor (A) having at least one thiol group, at least one Michael acceptor (B) and at least one specific catalyst (C), its use as a clear coating in a method to prepare a multilayer coating and a multilayer coating obtained from said process. Moreover, the present invention relates to a kit-of-parts comprising at least two separate containers C1 and C2, wherein the specific catalyst (C) is contained in container C1 and/or C2, preferably in container C1. Finally, the present invention relates to the use of specific salts of carboxylic acids as catalyst in a reaction between a Michael donor (A) having at least one thiol group and a Michael acceptor (B).

### Prior art

In the painting of high-quality goods, for example automobiles, the paint is usually applied in multiple layers. In multilayer paint systems of this kind for automobile chassis, a primer is first applied, which is intended to improve the adhesion between the substrate and the subsequent layers, and also serves to protect the substrate from corrosion if it is prone to corrosion. In addition, the primer ensures an improvement in the surface characteristics, by covering over any roughness and structure present in the substrate. Especially in the case of metal substrates, a primer-surfacer is often applied to the primer, the task of which is to further improve the surface characteristics and to improve the resistance to stonechipping. Typically, one or more coloring and/or effect layers are applied to the primer-surfacer, which are referred to as the basecoat. Finally, a clearcoat is generally applied to the basecoat, which ensures the desired shiny appearance and protects the paint system from environmental effects. Finally, the coated vehicle surface is passed through an oven at temperatures in excess of 140° C for 20 minutes, to cure and crosslink the basecoat and clearcoat.

Although the conventional process is adequate and used commercially worldwide in the automotive industry, there is significant room for improvement. For one, any reduction in energy, materials, or the time required to make these coatings would result in large economic gains due to the large scale of use. In particular, it would be advantageous for vehicle manufacturers to reduce the number of high temperature steps as well as the process time. Additionally, it would be beneficial to reduce the temperature at which these steps are conducted. Moreover, it would be beneficial to use crosslinkers that do not release toxic substances upon curing, like commonly used melamine crosslinkers, or which are non-toxic.

Commonly used clear coating systems are two-component systems comprising polyisocyanates and NCO-reactive (isocyanate-reactive) compounds mixed prior to application. The use of said two-component coatings comprising polyisocyanates and isocyanate-reactive compounds, however, is disadvantageous for reasons of inadequate storage stability, cost and environmental issues associated with free isocyanates.

In order to overcome the drawbacks of melamine and isocyanate crosslinkers, Michael addition reactions have been used to crosslink curable resin compositions such as a coating because this reaction does not give rise to unwanted by-products and the newly formed bond is a chemically stable bond, thus resulting in a stable crosslinking of the coating.

In said Michael additions unsaturated groups, such as acryloyl groups, react with active hydrogen-containing compounds by addition of an anion derived from the nucleophilic, active hydrogen-containing compound, acting as a donor, to the activated unsaturated group, which serves as an acceptor.

Generally, in Michael addition reaction, a strong base is used as the catalyst in order to generate a carbanion from an active hydrogen site. Many of the prior arts applying Michael addition reaction to the crosslinking of coating and other curable resin systems uses a strong base as the catalyst. The strong base so far in use includes alkali metal hydroxides, alkali metal alkoxides, quaternary ammonium hydroxides, quaternary ammonium hydrocarbonates, tertiary amines, guanidine, amidines, and tertiary phosphines, among other bases.

Michael reactions catalyzed by these strong bases are hard to control. Such reactions take place either much too fast or not at all, depending on the concentration of the used base. However, improvements in the crosslinking rate resulting from the use of high amounts of base are regrettably associated with an unacceptable deterioration in the paint appearance, since the crosslinking reaction of the catalyzed paint system already proceeds during the leveling and film-forming phase. This causes an irregular surface of the cured paint layer.

Furthermore, the base-catalyzed reaction may suffer from acid inhibition. Carbon dioxide present in the air, an acidic substrate or acidic substances released from other coating layers may severely retard or even stop crosslinking. Moreover, the basic catalyst might migrate into still uncured adjoining coating layers of a multilayer-coating thus resulting in insufficient curing of these coating layers.

### Object

Therefore, an object of the present invention is to provide a curable coating composition which can be cured using Michael addition reactions and which is substantially free from melamine resins and free and/or blocked isocyanate compounds. Said coating compositions should result in coating layers having excellent mechanical properties, preferably a high chemical resistance and hardness, a high gloss and a high adhesion to adjacent uncured or cured coating layers. Moreover, these coating compositions should have a high storage stability and a sufficient pot life in order to ensure adequate processing time of said compositions.

A further object of the present invention is to provide a multilayer coating, wherein the inventive coating material is applied directly to a basecoat layer and is cured in a joint curing step, with further coating films previously applied. Despite this process simplification, the resulting multicoat paint systems should exhibit a high gloss and chemical resistance as well as good mechanical properties.

### Technical solution

This problem is solved by the subject matter claimed in the claims and also by the preferred embodiments of that subject matter as described hereinafter.

A first subject of the present invention is therefore a Curable coating composition comprising:
(i) at least one Michael donor (A) comprising at least one thiol group,
(ii) at least one Michael acceptor (B) and
(iii) at least one catalyst (C) according to the general formula (I) 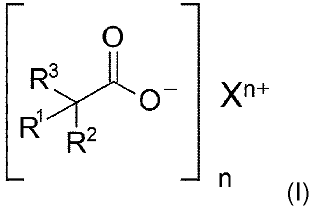 wherein
   - R¹, R² and R³: are, independently from each other, linear, branched or cyclic alkyl groups, aryl groups and aralkyl groups,
   - X: is selected from alkali metals, bismuth, zinc, zirconium or HN(R⁴)₃,
   - R⁴: is selected from C₁-C₁₀ alkyl groups or C₁-C₁₀ hydroxyalkyl groups and
   - n: is an integral number of 1 to 8.

A further subject of the present invention is a kit-of-parts, comprising at least two separate containers C1 and C2, wherein
- the container C1 contains at least one Michael donor (A) comprising at least one thiol group and at least one Michael acceptor (B) and the container C2 contains at least one catalyst (C), or
- the container C1 contains at least one Michael donor comprising at least one thiol group (A), the container C2 contains at least one Michael acceptor (B) and the catalyst (C) is contained in container C1 and/or container C2, preferably in container C1,
characterized in that the catalyst (C) has the general formula (I) 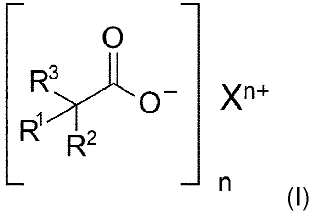 wherein
- R¹, R² and R³: are, independently from each other, linear, branched or cyclic alkyl groups, aryl groups or aralkyl groups,
- X: is selected from alkali metals, bismuth, zinc, zirconium or HN(R⁴)₃,

- R⁴: is selected from C₁-C₁₀ alkyl groups or C₁-C₁₀ hydroxyalkyl groups and
- n: is an integral number of 1 to 8.

An additional subject of the present invention is a process for producing a multilayer coating (MC) on a substrate (S), the process comprising:
(1) optionally applying a composition (Z1) to the substrate (S) and subsequent curing of the composition (Z1) to form a cured first coating layer (S1) on the substrate (S);
(2) applying, directly to the cured first coating layer (S1) or the substrate (S),
   (a) an aqueous basecoat composition (bL2a) to form a basecoat layer (BL2a) or
   (b) at least two aqueous basecoat compositions (bL2-a) and (bL2-z) in direct sequence to form at least two basecoat layers (BL2-a) and (BL2-z) directly upon each other;
(3) applying an inventive curable coating composition (cc) or a coating composition prepared from the inventive kit-of-parts directly to the coating layer (BL2a) or (BL2-z) to form a clear coat layer (CL),
(4) jointly curing the basecoat layer (BL2a) and the clear coat layer (CL) or the at least two basecoat layers (BL2-a) and (BL2-z) and the clear coat layer (CL).

A further subject matter of the present invention is a multilayer effect and/or color coating prepared according to the inventive process.

A final subject matter of the present invention is the use of at least one compound (C) of formula (I) 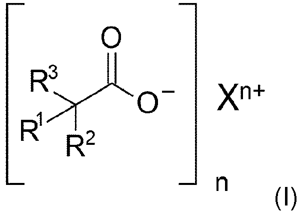 wherein
- R¹, R² and R³: are, independently, linear, branched or cyclic alkyl groups, aryl groups or aralkyl groups ,
- X: is selected from alkali metals, bismuth, zinc, zirconium or HN(R⁴)₃,

- R⁴: is selected from C₁-C₁₀ alkyl groups or C₁-C₁₀ hydroxyalkyl groups and
- n: is an integral number of 1 to 8,
as catalyst in the reaction between at least one Michael donor (A) comprising at least one thiol group and at least one Michael acceptor (B).

The inventive coating composition does not contain melamine resins and free and/or blocked isocyanate compounds which are toxic or release hazardous compounds during curing. Nevertheless, a high hardness and resistance against chemical substances is obtained after curing. Moreover, the compositions show a sufficient pot life, thus preventing that the crosslinking reaction already occurs during application or film-formation and ensures good processing properties. This results in cured coatings having a high gloss because deterioration in paint appearance occurring at low pot life is minimized. Moreover, this coating compositions can be used as clearcoats in 2C1B or 3C1B processes to prepare multilayer coatings because the catalyst used to crosslink the clearcoat layer does not migrate into the basecoat layer and interferes with curing of the basecoat layer. Additionally, this clearcoat layer has an excellent adhesion to the underlying uncured or cured basecoat layers. Thus the inventive coating compositions are especially suitable as clearcoat compositions in OEM and refinish applications.

### Detailed description

If reference is made in the context of the present invention to an official standard, this denotes the version of the standard that was current on the filing date, or, if no current version exists at that date, the last current version.

In this description of the invention, for convenience, "polymer" and "resin" are used interchangeably to encompass resins, oligomers, and polymers.

The term "poly(meth)acrylate" stands both for polyacrylates and for polymethacrylates. Poly(meth)acrylates may therefore be constructed of acrylates and/or methacrylates and may contain further ethylenically unsaturated monomers such as, for example, styrene or acrylic acid. The term "(meth)acryloyl" respectively, in the sense of the present invention embraces methacryloyl compounds, acryloyl compounds and mixtures thereof.

In the context of this invention, C₁-C₄-alkyl means methyl, ethyl, isopropyl, n-propyl, n-butyl, isobutyl, sec-butyl and tert-butyl, preferably methyl, ethyl and n-butyl, more preferably methyl and ethyl and most preferably methyl. The term "aralkyl group" means an aliphatic alkylene moiety comprising aryl groups. The alkyl portion of the aryl alkylene group can be linear or branched, saturated or unsaturated, and cyclic or acyclic, and wherein heteroatoms either may or may not be present in either the aryl or the alkyl portion.

A "Michael donor", as used herein, is a compound with at least one Michael donor functional group, which is a functional group containing at least one Michael active hydrogen atom.. In case of the present invention, the functional group is a thiol group.

The term "Michael acceptor" denotes compounds having at least one unsaturated group, preferably at least one (meth)acryloyl group.

### Inventive curable coating composition:

The inventive curable coating composition comprises as mandatory components at least one Michael donor (A) (i), at least one Michael acceptor (B) (ii) and at least one catalyst (C) (iii).

### (i) Michael donor (A) comprising at least one thiol group

The inventive curable coating compositions comprises at least one Michael donor (A), having at least one thiol group.

Preferred Michael donors (A) comprise 2 to 10, preferably 2 to 8, more preferably 3 to 6, very preferably 4 thiol groups. The use of Michael donors (A) having 4 thiol groups ensures a high crosslinking density upon curing and results in good resistance against chemicals, a high gloss and a good adhesion to the substrate or other coating layers.

The Michael donor (A) preferably has a thiol content of 10 to 45% by weight, preferably 15 to 40% by weight, more preferably 20 to 35% by weight, very preferably 22 to 30% by weight, based on the total weight of the Michael donor (A) and measured by iodometric titration.

Particularly preferred Michael donors (A) have an active hydrogen equivalent weight of 100 to 150 g/mol, preferably 110 to 140 g/mol, more preferably 115 to 135 g/mol, very preferably 120 to 130 g/mol.

The at least one thiol group of Michael donor (A) is preferably attached via a specific functional group to the backbone of said Michael donor (A). Favorably, the Michael donor (A) therefore comprises at least one functional group of formula (II) 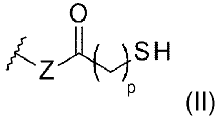 wherein
- Z: is oxygen, a nitrogen-containing group or an alkyl, aryl, aralkyl or alkaryl radical, preferably oxygen, and
- p: is an integral number of 1 to 6, preferably 1 to 4, more preferably 1 to 3, very preferably 2.

As outlined above, Michael donors (A) having exactly 4 thiol groups are particularly preferred within the present invention. Thus, the inventive coating composition favorably comprises at least one Michael donor (A) of formula (III) 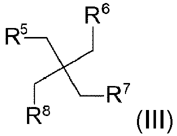 wherein
- R⁵ to R⁸: are, independently from each other, selected from hydrogen, hydroxy, C₁-C₁₀ alkylene groups, C₁-C₁₀ thioalkylene groups, C₂-C₁₀ hydroxy alkylene groups, C₂-C₁₀ hydroxy thioalkylene groups and residues *-O-C(O)-(CH₂)_{q}-SH with the proviso that at least one of R⁵ to R⁸ contains a thiol group and
- q: is an integral number of 1 to 10.

In this regard, is its especially preferred if R⁵ to R⁸ are, independently from each other, a residue *-O-C(O)-(CH₂)_{q}-SH with q being an integral number of 2. Thus, a particularly preferred Michael donor (Al) is pentaerythritol tetra(3-mercaptopropionat) having the CAS number 7575-23-7. The use of said Michael donors (A) having the structure of formula (III) and comprising 4 functional thiol groups *-O-C(O)-(CH₂)₂-SH in combination with the at least one Michael acceptor (B) and the at least one catalyst (C) allows to achieve a high crosslinking density upon curing and thus result in a high chemical resistance of the cured coating layer. Additionally, said Michael donors (A) allow to achieve a high gloss as well as good mechanical properties upon curing. It is particularly preferred if exactly one of the aforementioned Michael donors (A) is used, i.e. no mixture of different Michael donors (A) are present in the inventive coating composition.

The curable coating composition preferably comprises the at least one Michael donor (A) in a total amount of 10 to 50% by weight, preferably 15 to 45% by weight, more preferably 18 to 30% by weight, very preferably 20 to 25% by weight, based in each case on the total weight of the composition. Use of the stated amounts results in a high crosslinking density, thus resulting in good mechanical properties, a high chemical resistance as well as a high gloss and adhesion to the substrate or further coating layers.

### (ii) Michael acceptor (B)

The Michael acceptor (B) comprises at least one unsaturated group, preferably a (meth)acryloyl group. Particularly preferred Michael donors (B) comprise a functionality of 1 to 20, preferably 2 to 10, very preferably 3 to 12. The functionality is defined as the average number of unsaturated groups, preferably (meth)acryloyl groups, present in the Michael acceptor (B). Use of Michael acceptors (B) having the stated functionality ensures high crosslinking density upon reaction with the at least one Michael donor (A) and thus results in cured coating layers having excellent mechanical and chemical stability, a high gloss and excellent adhesion to the substrate or further coating layers.

The at least one Michael acceptor (B) preferably comprises at least one functional group of the general structure (IV) 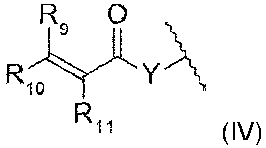 wherein
- R⁹ to R¹¹: are, independently from each other, selected from hydrogen, linear, branched or cyclic alkyl radicals, aryl radicals, aralkyl radicals and alkaryl radicals, wherein said radicals can optionally contain ether linkages, carboxyl groups, further carbonyl groups, nitrogen-containing groups or combinations thereof and
- Y: is oxygen, a nitrogen-containing group or an alkyl, aryl, aralkyl or alkaryl radical described for R⁹, R¹⁰ and R¹¹.

Suitable Michael acceptors (B) of the present invention thus include molecules in which some or all of the structures (IV) are residues of (meth)acrylic acid, fumaric acid, or maleic acid, substituted versions thereof, or combinations thereof, preferably (meth)acrylic acid, attached to a skeleton molecule preferably through an ester linkage. As used herein, the "skeleton" of a Michael acceptor is the portion of the acceptor molecule other than structure (IV). Any structure (IV) may be attached to another (IV) group or to the skeleton directly. A compound with two or more functional groups, each containing structure (IV), is known herein as a multi-functional Michael acceptor. When a suitable skeleton of the Michael acceptor is a polymer, the functional groups (IV) may be pendent from the polymer chain, or they may be incorporated into the polymer chain, or a combination thereof.

In this regard, it is therefore preferred, if residues R⁹ to R¹¹ in formula (IV) are, independently from each other, selected from hydrogen. Furthermore, Y in formula (IV) is preferably oxygen.

Suitable skeletons for Michael acceptors useful in the present invention include but are not limited to diols such as ethylene glycol, propylene glycol, propanediol, butanediol, diethylene glycol, neopentyl glycol, triethylene glycol, hexanediol, dipropylene glycol, cyclohexanedimethanol, tetraethylene glycol, 2,2,4-trimethyl-1,3-pentanediol, tripropylene glycol and tricyclodecanedimethylol, triols such as glycerol, propoxylated glycerol, trimethylol propane and castor oil, polyhydric alcohols such as pentaerythritols, dipentaerythritols, polyhydric alkylene oxides and other polyhydric polymers, saccharides including glucose, fructose, maltose, sucrose, sorbitol and isosorbide, epoxides including bisphenol A diglycidylether, epoxidized polybutadiene and epoxidized soybean oil and poly(meth)acrylates. Also contemplated are similar alcohols and epoxides, substituted versions thereof, and mixtures thereof. Also contemplated as suitable skeletons are amines such as ethylene diamine, 1,6 hexane diamine and piperazine. Further suitable skeletons are poly(meth)acrylates

The at least one Michael acceptor (B) of the invention generally has an average molecular weight M_{w} of 300 to 50,000 g/mol, preferably 800 to 30,000 g/mol, very preferably 1,100 to 20,000 g/mol, measured according to GPC in accordance with DIN EN ISO 13885-1 :2008-08. The average molecular weight of Michael acceptors (B) can, for example, be determined on oligomers by determination of the degree of polymerization and subsequent calculation of molecular weight from the individual weights of the monomers or on polymers by gel permeation chromatography with a series of unbranched polystyrene standards, tetrahydrofuran containing 0.1 mol/l acetic acid as eluent using the following parameters: temperature 35 °C, flow rate 1.0 ml/min, injection volume 100 µl, run time 40 minutes.

The at least one Michael acceptor (B) preferably has a glass transition temperature T_{g} of -5 to 60 °C, preferably 0 to 45 °C, measured by differential scanning calorimeter using a heating rate of 10 °C/min. The glass transition temperature of the Michael acceptor (B) can be determined as follows: An appropriate sample is prepared by application of the respective liquid Michael acceptor (B) on a glass plate with a layer thickness of approx. 50 µm and subsequent drying at e. g. 130 °C for e. g. 30 min. A small portion of the dried film is brought into a DSC crucible (aluminum, non-hermetic). The crucible is sealed with a lid by manual pressing. Sample crucibles are then mounted in the calorimeter (Q2000 by TA Instruments). Measurements include a first heating run from -90 °C up to 100 °C with a heating rate of 10 K/min, a cooling run from 100 °C down to -90 °C with a cooling rate of 10 K/min and a second heating run from -90 °C up to 100 °C with a heating rate of 10 K/min. During the measurements, samples are under inert atmosphere ensured by constant nitrogen flow. Glass transition temperatures are assigned to the temperature at which the measured heat flow signal of the second heating run is intersected by a line that is equidistant to the two extrapolated baselines (half-step-height method according to EN ISO 11357-2:2014-07).

Particularly preferred Michael acceptors (B) are selected from the group consisting of aliphatic urethane hexa(meth)acrylate oligomers, polymers comprising at least one (meth)acryloyl group and optionally at least one hydroxy group or mixtures thereof, preferably aliphatic urethane hexaacrylate oligomers.

A compound with structures (IV) that include two or more residues of (meth)acrylic acid attached to the compound with an ester linkage is called herein a "poly-functional (meth)acrylate." Poly-functional (meth)acrylates with at least two double bonds capable of acting as the acceptor in Michael addition are preferred multi-functional Michael acceptors (B) in the present invention.

Examples of suitable multi-functional Michael acceptors that are poly-functional acrylates include 1,4-butanediol diacrylate, 1,6-hexanediol diacrylate, neopentyl glycol diacrylate, diethylene glycol diacrylate, triethylene glycol diacrylate, tetraethylene glycol diacrylate, polyethylene glycol diacrylate, dipropylene glycol diacrylate, tripropylene glycol diacrylate, cyclohexane dimethanol diacrylate, alkoxylated hexanediol diacrylate, alkoxylated cyclohexane dimethanol diacrylate, propoxylated neopentyl glycol diacrylate, glyceral triacrylate, trimethylolpropane triacrylate, ethoxylated trimethylolpropane triacrylate, propoxylated trimethylolpropane triacrylate, isosorbide diacrylate, acrylated polyester oligomer, bisphenol A diacrylate, ethoxylated bisphenol A diacrylate, tris(2-hydroxyethyl) isocyanurate triacrylate, acrylated epoxidized soybean oil, acrylated aliphatic urethane oligomer, acrylated aromatic urethane oligomer, and the like, and mixtures thereof. Analogs of any of these multi-functional Michael acceptors having one or more acrylate groups replaced by methacrylate are further contemplated by the present invention.

Particularly preferred Michael acceptors (B) are aliphatic urethane hexaacrylate polymers obtained by
a) reacting acrylic acid with an aliphatic tetrabasic acid or an aliphatic tetraol-based polyester or an aliphatic tetraol, preferably an aliphatic tetraol, especially pentaerythritol, such that the obtained reaction product still comprises at least one free carboxylic acid or hydroxyl group and
b) reacting the reaction product of step a) with a polyisocyanate, preferably a diisocyanate, compound.

An especially preferred product obtained after step a) is therefore pentaerythritol triacrylate comprising three acrylate groups and one free hydroxy group. The reaction is preferably performed in the presence of a catalyst. Curing of urethane hexaacrylate polymers, such as those described above, creates a 3-dimensionally crosslinked structure. Increasing the crosslink density of the cured coating is one way to improve the mechanical and thermal properties of the coating. Urethane acrylates comprising at least six polymerizable functional groups are preferred since crosslink density increases with the number of polymerizable functional groups. High crosslink density is known to improve properties such as abrasion and chemical resistance. Moreover, the use of such compounds in combination with the at least one Michael donor (A) and the at least one catalyst (C) leads to a crosslinked 3-dimensional network which is homogeneous throughout the cured coating, and thus results in improved mechanical properties and chemical resistance, a high degree of optical transparency and a high adhesion to the substrate or further coating layers.

Further preferred Michael acceptors (B) are poly-functional (meth)acrylates in which the skeleton is polymeric and which optionally comprise at least one hydroxy group. The (meth)acrylate groups may be attached to the polymeric skeleton in any of a wide variety of ways. For example, a (meth)acrylate ester monomer may be attached to a polymerizable functional group through the ester linkage, and that polymerizable functional group may be polymerized with other monomers in a way that leaves the double bond of the (meth)acrylate group intact. For another example, a polymer may be made with functional groups (such as, for example, a polyester with residual hydroxyls or a poly(meth)acrylate with epoxide groups), which may be reacted with a (meth)acrylate ester (for example, by transesterification or ring opening reactions), to yield a polymer with pendant (meth)acrylate groups. For yet another example, a homopolymer or copolymer may be made that includes a poly-functional acrylate monomer (such as trimethylol propane triacrylate) in such a way that not all the acrylate groups react.

Particularly preferred poly-functional (meth)acrylates are obtained by reacting a (meth)acrylate polymer comprising at least epoxide group with (meth)acrylic acid. In this context, the (meth)acrylate polymer preferably comprises at least one pendant or terminal epoxide group. Introduction of epoxide groups can, for example, be achieved by using epoxide containing (meth)acrylate monomers, such as glycidyl(meth)acrylate, during the preparation of the (meth)acrylate polymer. As is readily apparent, the amount of unsaturated groups of the poly-functional (meth)acrylate is determined by the amount of epoxide groups in the (meth)acrylate polymer backbone because these groups are used to attach the unsaturated groups, preferably by reacting the epoxide groups with (meth)acrylic acid. Particularly suitable (meth)acrylate polymers are obtained by radical polymerization of esters of (meth)acrylic acid, vinyl monomers, such as styrene, and glycidyl (meth)acrylate. Especially preferred polymers comprising at least one (meth)acryloyl group and at least one hydroxy group are obtained by
a) preparing an epoxy-functional methacrylate polymer by polymerizing at least one C₁-C₈ (meth)acrylate, preferably a mixture of methyl methacrylate, n-butyl methacylate and n-butylacrylate, at least one vinyl monomer, preferably styrene, and glycidyl methacrylate in the presence of a radical initiator and
b) reacting the prepared epoxy-functional methacrylate polymer in stochiometric amounts, based on the molar amount of glycidyl methacrylate, with acrylic acid and/or methacrylic acid.

The amount of glycidyl methacrylate - based on the total amount of monomers used in step a) - is preferably in the range from 10 to 90% by weight, more preferably 20 to 80% by weight, very preferably 31 to 73% by weight.

The weight ratio of the at least one C₁-C₈ (meth)acrylate, preferably a mixture of methyl methacrylate, n-butyl methacylate and n-butylacrylate, to the at least one vinyl monomer, preferably styrene, is suitably in the range from 2:1 to 1:2, more preferably 1.4 : 1 to 1 : 1.

Further especially preferred polymers comprising at least one (meth)acryloyl group and at least one hydroxy group are obtained by reacting a dicarbonyl compound having exactly 2 aldehyde and/or keto groups (a1) with a diacrylate compound (a2) in the presence of at least one tertiary amine or phosphine. The reaction between the dicarbonyl compound and the diacrylate compound (i.e. an electron-poor alkene) catalyzed by a tertiary amine or phosphine is also called the Baylis-Hilman reaction. This reaction results in an α-methylene-β-hydroxy carbonyl derivative and typically uses unhindered nucleophilic tertiary amine catalysts as exemplified by 1,4-diazabicyclo[2.2.2]octane (DABCO) or 2- or 4-dimethylaminopyridine.

The dicarbonyl compound (a1) is preferably a diketone or a dialdehyde; with particular preference the compound (a1) is a dialdehyde.

In accordance with the invention the aldehyde and/or keto groups in the compound (a1) are connected to one another through an aliphatic, cycloaliphatic or aromatic hydrocarbon radical.

The dicarbonyl compound (a1) is preferably a dialdehyde of the formula (V)

OHC-R₈-CHO (V)

in which
R₈ is a substituted or unsubstituted C₁-C₈-alkyl, a substituted or unsubstituted C₂-C₈-alkenyl, a substituted or unsubstituted carboxy-C₁-C₈-alkyl, a substituted or unsubstituted C₆-C₁₂-aryl, a substituted or unsubstituted C₆-C₁₂-arylene, a substituted or unsubstituted C₃-C₁₂-cycloalkylene, or a substituted or unsubstituted C₁-C₂₀-alkylene. Very particular preference is given to unsubstituted C₆-C₁₂-arylene, C₂-C₂₀-alkylene or a single bond.

C₁-C₂₀-alkylene here is linear or branched alkylene, e.g., methylene, 1,2-ethylene, 1,2- or 1,3-propylene, 1,2-, 1,3- or 1,4-butylene, 1,1-dimethyl-1,2-ethylene, 1,2-dimethyl-1,2-ethylene, 1,5-pentylene, 1,6-hexylene, 1,8-octylene, 1,10-decylene or 1,20-eicosylene. C₃-C₁₂-cycloalkylene is for example cyclopropylene, cyclopentylene, cyclohexylene, cyclooctylene or cyclododecylene. C₆-C₁₂-arylene is for example phenylene, naphthylene or biphenylene.

Preferred radicals R₈ are a single bond, methylene, 1,2-ethylene, 1,3-propylene, 1,2-propylene, 1,4-butylene, 1,5-pentylene, 1,6-hexylene, 1,2-phenylene, 1,3-phenylene, 1,4-phenylene, 2,3-tolylene, 2,4-tolylene, 2,6-tolylene, 1,2-cyclohexylene, 1,3-cyclohexylene, and 1,4-cyclohexylene.

Particularly preferred radicals R₈ are a single bond, 1,2-ethylene, 1,3-propylene, 1,4-butylene, 1,3-phenylene, and 1,4-phenylene.

Preferred dicarbonyl compounds (a1) are glyoxal, succinaldehyde, glutaraldehyde, caproaldehyde, phthalaldehyde, isophthalaldehyde, and terephthalaldehyde, particular preference being given to glyoxal, succinaldehyde, glutaraldehyde, isophthalaldehyde, and terephthalaldehyde. A particularly preferred dicarbonyl compound (a1) is terephthalaldehyde.

The diacrylate compound (a2) comprises any desired difunctional acrylates, preferably diacrylates of alkanediols or cycloalkanediols and also lower polyalkylene glycols, preferably polyethylene glycols or polypropylene glycols, or - albeit less preferably - difunctional acrylamides of diamines, preferably of linear or branched aliphatic or cycloaliphatic diamines.

The compounds (a2) are preferably those having a molecular weight below 400 g/mol, and more preferably are structurally uniform compounds, i.e., those which have no molecular weight distribution.

The alkanediols may preferably be ethylene glycol, 2,2-dimethyl-1,2-ethanediol, 1,3-propanediol, 1,2-propanediol, 1,2-butanediol, 1,3-butanediol, 1,4-butanediol, 3-methylpentane-1,5-diol, 2-ethylhexane-1,3-diol, 2,4-diethyloctane-1,3-diol, 1,6-hexanediol, neopentyl glycol, 2-ethyl-1,3-propanediol or 2-methyl-1,3-propanediol.

The cycloalkanediols may preferably be 2,2-bis(4-hydroxycyclohexyl)propane, 1,1-, 1,2-, 1,3-, and 1,4-cyclohexanedimethanol, or 1,2-, 1,3- or 1,4-cyclohexanediol.

The polyalkylene glycols may preferably be polyethylene glycols, polypropylene glycols, polyTHF or poly-1,3-propanediol. Particular preference is given to polyethylene glycols or polypropylene glycols as a mixture of the isomers. Among the polyalkylene glycols, dimers to pentamers are preferred.

The diamines are preferably linear or branched, aliphatic or cycloaliphatic, primary and/or secondary diamines, such as 1,2-diaminoethane, 1,2- or 1,3-diaminopropane, 1,4-diaminobutane, 1,5-diaminopentane, 1,6-diaminohexane, 1,7-diaminoheptane, 1,8-diaminooctane, 1,9-diaminononane, 1,10-diaminodecane, 1,12-diaminododecane or piperazine, for example.

Particularly preferred diacrylates (a2) are ethylene glycol diacrylate, 1,2-propanediol diacrylate, 1,3-propanediol diacrylate, 1,3-butanediol diacrylate, 1,4-butanediol diacrylate, 1,6-hexanediol diacrylate, diethylene glycol diacrylate, dipropylene glycol diacrylate, tripropylene glycol diacrylate, N,N'-bisacryloyl-1,2-diaminoethane, N,N1-bisacryloyl-1,6-diaminohexane or N,N'-bisacryloylpiperazine. Especially preferred compounds are 1,6-hexanediol diacrylate and dipropylene glycol diacrylate.

The use of difunctional compounds (a1) with difunctional compounds (a2) results in strictly linear polymers - that is, they exhibit no degree, or only a negligible degree, of branching. A negligible degree of branching is one of below 5%, preferably below 4%, more preferably below 3%, very preferably below 2%, and more particularly below 1%.

The implementation of the Baylis-Hillman reaction is known per se to the skilled worker and is subject matter of a number of literature reviews. The reaction may be implemented at a temperature between 0° C and 100° C, preferably 20 to 80° C and more preferably 25° C to 60° C.

A catalyst used for the reaction is usually a tertiary amine or phosphine, examples being trimethylamine, triethylamine, tri-n-butylamine, ethyldiisopropylamine, methyldiisopropylamine, N-methylmorpholine, N-methylpiperidine, triethanolamine, N,N-dimethylethanolamine, 2-dimethylaminopyridine, 4-dimethylaminopyridine, diazabicyclooctane, 1,5-diazabicyclo[4.3.0]non-5-ene (DBN), 1,8-diazabicyclo[5.4.0]undec-7-ene (DBU), pyrrocoline, quinuclidine, quinidine, trimethylphosphine, triethylphosphine, tri-n-butylphosphine, dimethylphenylphosphine, and, preferably, 1,4-diazabicyclo[2.2.2]octane (DABCO). The catalyst is used in general in amounts of 1 to 100 mol % in respect of acrylic groups, preferably 5-50, more preferably 10-40, and very preferably 15-30 mol %.

The stoichiometry between acrylate groups and aldehyde and/or keto groups is generally 1:0.05-1.5, preferably 1:0.1-1.3, more preferably 1:0.2-1.0, and very preferably 1:0.4-1.0.

Solvents which can be used for the Baylis-Hillman reaction are preferably water, petroleum ether, ligroin, toluene, benzene, xylene, tetrahydrofuran (THF), diethyl ether, dioxane, a methacrylate, or else the acrylate used for the reaction. The reaction can also be carried out in the absence of a solvent.

The curable coating composition comprises the at least one Michael acceptor (B) typically in an amount that is sufficient to obtain a highly crosslinked network after curing in order to ensure high mechanical and chemical stability. Preferred coating compositions comprise the at least one Michael acceptor (B) in a total amount of 20 to 55% by weight, preferably by 25 to 50% by weight, more preferably 28 to 45% by weight, very preferably 30 to 40% by weight, based in each case on the total weight of the coating composition. Use of the afore-stated amounts of the at least one Michael acceptor (B), especially the particularly preferred polymeric Michael acceptors, results in cured coating compositions having high mechanical and chemical properties as well as high weathering properties. Moreover, the cured coatings are highly transparent thus rendering them suitable as clear coatings. Additionally, the cured coatings have a high adhesion to uncured or already cured coating layers.

The weight ratio of the at least one Michael donor (A) to the at least one Michael acceptor (B) is preferably from 3 : 1 to 1 : 3, preferably 1.7 : 1 to 1.4 : 1.

### (iii) Catalyst (C) of general formula (I):

The inventive coating composition comprises at least one catalyst (C) of general formula (I) as third mandatory compound. This catalyst is able to achieve a high degree of crosslinking of the components (A) and (B). In accordance with a preferred embodiment of the present invention, the residues R¹, R² and R³ in formula (I) are, independently, linear or branched C₁-C₁₀ alkyl groups with the proviso that the sum of all carbon atoms of residues R¹, R² and R³ is 8. According to a further preferred embodiment, at least one of the residues R1, R2 or R3, preferably R1 and R2, is/are a C₆-C₁₄-aryl or C₇-C₃₀-aralkyl group. The use of such catalysts (C) leads to a high conversion rate of compounds (A) and (B), thus resulting in a highly crosslinked network upon curing which allows to obtain good mechanical properties, a high chemical resistance, a high gloss and excellent adhesion. At the same time, the pot life of the curable coating composition is sufficient to allow processing without any difficulties. Moreover, these catalysts are stable and do not undergo cleavage reactions during storage.

Particular preferred catalysts (C) are specific salts of neodecanoic acid. Thus, it is very favorable if the residues R¹ and R² in formula (I) are, independently from each other, linear or branched C₃-C₅ alkyl groups and residue R³ is a methyl group, with the proviso that the sum of all carbon atoms of residues R¹, R² and R³ is 8.

Alternatively, it is very favorable if the residues R¹ and R² in formula (I) are, independently, phenyl groups and residue R³ is a C₁-C₁₂-alkyl group, preferably a C₆-C₁₀-alkyl group, especially a Cs-alkyl group.

The catalyst (C) is the salt of a specific carboxylic acid with an alkali metal, bismuth, zinc, zirconium or amines. Surprisingly, the crosslinking density of the cured coating composition could be enhanced by using specific salts of said carboxylic acid. It is therefore especially preferred, if X in formula (I) is selected from the group consisting of lithium, sodium, potassium, bismuth, zinc, zirconium and HN(R⁴)₃ with R⁴ being *-(CH₂)₂-OH. Use of said salts of the carboxylic acid of formula (I) as catalyst leads to sufficient crosslinking of compounds (A) and (B) during curing and thus results in high chemical stability, good mechanical properties and high gloss. Curable coating compositions comprising said salts are therefore suitable as clearcoats for use in OEM and refinish applications. Use of other metals, for example calcium, does not lead to sufficient crosslinking and thus results in decreased chemical resistance and reduced gloss.

The parameter n of formula (I) is depending on the valence of X. Preferably, X has a valence of 1 to 4, thus favorable values for n in formula (I) are integral numbers of 1 to 4.

In accordance with the present invention, it is preferred if the at least one catalyst (C) comprises a metal content of 3 to 40% by weight, preferably 3.5 to 30% by weight, very preferably 4.5 to 26% by weight, based in each case on the total weight of the catalyst (C).

In order to achieve a high crosslinking density on the one hand and an acceptable pot life on the other hand, the curable coating composition preferably comprises the at least one catalyst (C) in specific amounts. According to a favorable embodiment of the first subject matter of the present invention, the coating composition comprises the at least one catalyst (C) in a total amount of 0.05 to 6% by weight, preferably by 0.08 to 2.5% by weight, more preferably 0.1 to 1.5% by weight, very preferably 0.2 to 0.7% by weight, based in each case on the total weight of the coating composition. If the curable coating composition comprises more than one catalyst (C) of general formula (I), the aforementioned amounts refer to the total amount of all catalysts (C) having general formula (I). For example, if exactly two catalysts (C), namely catalyst (C1) and catalyst (C2), of general formula (I) are present, the abovementioned amounts refer to the sum of the amounts of catalyst (C1) and (C2).

The curable coating compositions according to the invention can comprise a single catalyst (C) of formula (I) or a mixture of different catalysts (C) of formula (I). Particularly good results in terms of high chemical resistance, good mechanical properties and high gloss are obtained if the curable coating composition comprises at least 2 different catalysts (C) of formula (I), preferably precisely 3 different catalysts (C) of formula (I) or precisely 4 different catalysts (C) of formula (I). The use of said catalyst mixture leads to excellent mechanical properties as well as a high chemical resistance and a high gloss. Such curable coating compositions can therefore be employed, preferably as clearcoat composition, in the technologically and esthetically particularly demanding field of automotive OEM (production line) finishing.

According to an first preferred embodiment, the curable coating composition comprises a mixture of exactly three different catalysts (C). Such a composition favorably comprises at least one catalyst (C1-1) of formula (Ia) and at least one catalyst (C1-2) of formula (Ib) and at least one catalyst (C1-3) of formula (Ic) 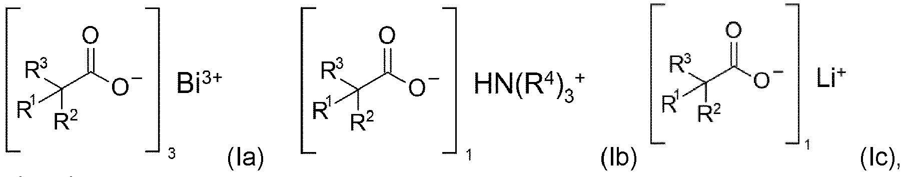 wherein
- R¹ and R²: are, independently from each other, linear or branched C₃-C₅ alkyl groups,
- R³: is a methyl group with the proviso that the sum of all carbon atoms of residues R¹, R² and R³ is 8 and
- R⁴: is a residue *-(CH₂)₂-OH.

Alternatively, such composition preferably comprises at least one catalyst (C1-1) of formula (Ia) and at least one catalyst (C1-2) of formula (Ib) and at least one catalyst (C1-3) of formula (Ic) 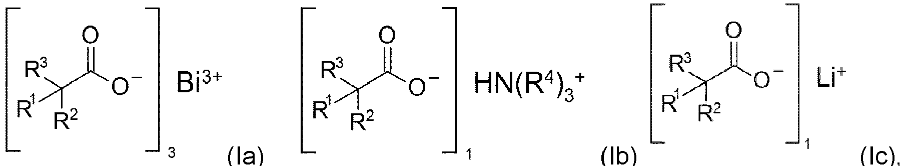 wherein
- R¹ and R²: are, independently from each other, phenyl groups,
- R³: C₁-C₁₂-alkyl group, preferably a C₆-C₁₀-alkyl group, especially a Cs-alkyl group and
- R⁴: is a residue *-(CH₂)₂-OH.

The first catalyst (C1-1) contained in said catalyst mixture is a bismuth salt of the specific carboxylic acid (cf. formula (Ia)) and preferably comprises a bismuth content of 10 to 40% by weight, preferably 15 to 30% by weight, very preferably 22 to 25% by weight, based in each case on the total weight of the catalyst (C1-1).

Said mixture contains a second catalyst (C1-2) of formula (Ib) being a tertiary amine salt of the specific carboxylic acid and favorably having a content of the ion HN(R⁴)₃⁺ of 10 to 30% by weight, preferably 15 to 25% by weight, very preferably 18 to 22% by weight, based in each case on the total weight of the catalyst (C1-2).

The third catalyst (C1-3) of formula (Ic) contained in said catalyst mixture is a lithium salt of the specific carboxylic acid and preferably comprises a lithium content of 0.1 to 10% by weight, preferably 0.5 to 5% by weight, very preferably 1 to 3% by weight, based in each case on the total weight of the catalyst (C1-3).

Suitably, each catalyst (C1-1), (C1-2) and (C1-3) is contained in a specific total amount with respect to the total weight of the coating composition. Thus, the at least one catalyst (C1-1) of formula (Ia) is preferably present a total amount of 0.01 to 1% by weight, very preferably 0.05 to 0.2% by weight, based in each case on the total weight of the coating composition.

Moreover, the coating composition preferably comprises the at least one catalyst (C1-2) of formula (Ib) in a total amount of 0.05 to 1% by weight, very preferably 0.15 to 0.4% by weight, based in each case on the total weight of the coating composition.

The coating composition favorably comprises the at least one catalyst (C1-3) of formula (Ic) in a total amount of 0.05 to 1% by weight, very preferably 0.15 to 0.25% by weight, based in each case on the total weight of the coating composition.

The catalyst mixture preferably contains each catalyst (C1-1), (C1-2) and (C1-3) in a specific weight ratio. Therefore, the coating composition preferably comprises a weight ratio of the at least one catalyst (C1-1) to the at least one catalyst (C1-2) and to the at least one catalyst (C1-3) of 1 : 1 : 1 to 1 : 5 : 3, preferably of 1 : 2 : 1.5 to 1 : 3 : 2. Use of said weight ratio leads to a high density and thus in a high chemical resistance and good mechanical properties. However, said catalyst ratio does not shorten the pot life in such a way that application of the coating composition to the substrate can no longer be performed using conventional coating equipment. Additionally, a high gloss can be obtained when using said catalyst combination, thus rendering the inventive coating compositions suitable as clear coats for use in OEM and refinish applications.

An alternative particularly preferred embodiment of the inventive coating composition comprises a mixture of exactly four different catalysts (C), namely at least one catalyst (C2-1) of formula (IIa), at least one catalyst (C2-2) of formula (IIb), at least one catalyst (C2-3) of formula (IIc) and at least one catalyst (C2-4) of formula (IId) 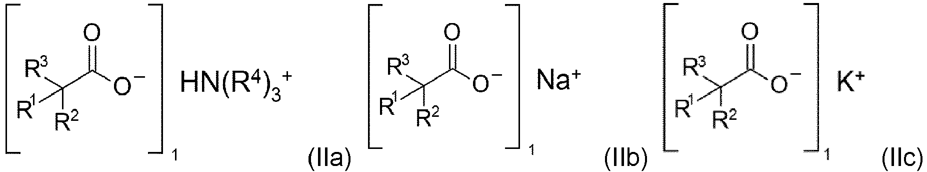 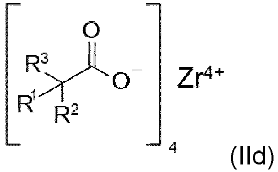 wherein
- R¹ and R²: are, independently from each other, linear or branched C₃-C₅ alkyl groups,
- R³: is a methyl group with the proviso that the sum of all carbon atoms of residues R¹, R² and R³ is 8 and
- R⁴: is a residue *-(CH₂)₂-OH.

Alternatively, the inventive coating composition preferably comprises a mixture of exactly four different catalysts (C), namely at least one catalyst (C2-1) of formula (IIa), at least one catalyst (C2-2) of formula (IIb), at least one catalyst (C2-3) of formula (IIc) and at least one catalyst (C2-4) of formula (IId) 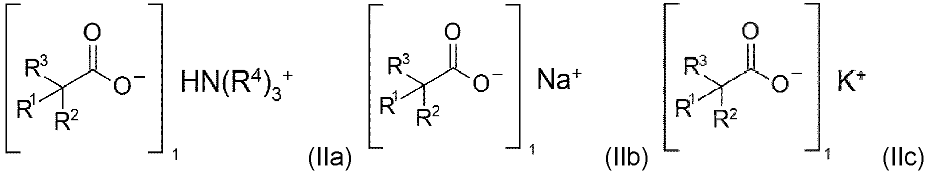 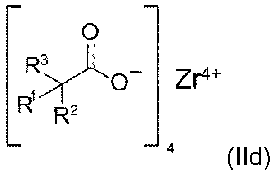 wherein
- R¹ and R²: are, independently from each other, phenyl groups,
- R³: C₁-C₁₂-alkyl group, preferably a C₆-C₁₀-alkyl group, especially a Cs-alkyl group and
- R⁴: is a residue *-(CH₂)₂-OH.

The first catalyst (C2-1) contained in said mixture is a tertiary amine salt of the specific carboxylic acid (cf. formula (IIa)) and preferably comprises a content of the ion HN(R⁴)₃⁺ of 10 to 30% by weight, preferably 15 to 25% by weight, very preferably 18 to 22% by weight, based in each case on the total weight of the catalyst (C2-1).

Said mixture contains as second catalyst (C2-2) a sodium salt of the specific carboxylic acid (cf. formula (IIb)) preferably comprising a sodium content of 1 to 15% by weight, preferably 3 to 10% by weight, very preferably 4 to 8% by weight, based in each case on the total weight of the catalyst (C2-2), is used.

The third catalyst (C2-3) of formula (IIc) favorably comprises a potassium content of 5 to 20% by weight, preferably 7 to 15% by weight, very preferably 9 to 12% by weight, based in each case on the total weight of the catalyst (C2-3).

Said mixture contains as fourth catalyst (C2-4) a zirconium salt of the specific carboxylic acid (cf. formula (IId)) preferably comprising a zirconium content of 10 to 40% by weight, preferably 15 to 30% by weight, very preferably 20 to 25% by weight, based in each case on the total weight of the catalyst (C2-4).

Suitably, each catalyst (C2-1), (C2-2), (C2-3) and (C2-4) is contained in a specific total amount with respect to the total weight of the coating composition. Thus, the at least one catalyst (C2-1) of formula (IIa) is present in a total amount of 0.05 to 1% by weight, very preferably 0.15 to 0.4% by weight, based in each case on the total weight of the coating composition.

Moreover, the coating composition preferably comprises the at least one catalyst (C2-2) of formula (IIb) in a total amount of 0.005 to 0.5% by weight, very preferably 0.01 to 0.05% by weight, based in each case on the total weight of the coating composition.

The coating composition favorably comprises the at least one catalyst (C2-3) of formula (IIc) in a total amount of 0.01 to 0.5% by weight, very preferably 0.05 to 0.15% by weight, based in each case on the total weight of the coating composition.

Additionally, the coating composition comprises the at least one catalyst (C2-4) of formula (IId) in a total amount of 0.01 to 0.5% by weight, very preferably 0.04 to 0.1% by weight, based in each case on the total weight of the coating composition.

The catalyst mixture preferably contains each catalyst (C2-1), (C2-2), (C2-3) and (C2-4) in a specific weight ratio. Therefore, the coating composition preferably comprises a weight ratio of the at least one catalyst (C2-1) to the at least one catalyst (C2-2) to the at least one catalyst (C2-3) to the at least one catalyst (C2-4) of 15 : 1 : 6 : 4 to 5 : 1 : 1 : 1, preferably 10 : 1 : 4 : 2 to 6 : 1 : 2 : 1. Use of said weight ratio leads to a high crosslinking density and thus in a high chemical resistance and good mechanical properties. However, said catalyst ratio does not shorten the pot life in such a way that application of the coating composition to the substrate can no longer be performed using conventional coating equipment. Additionally, a high gloss can be obtained when using said catalyst combination, thus rendering the inventive coating compositions suitable as clear coats for use in OEM and refinish applications.

Apart from the mandatory components (A), (B) and (C) of the inventive curable coating composition, the composition might comprise further components described in the following. However, the inventive coating composition does preferably not comprise any further crosslinkers, especially melamine resins as well as blocked and unblocked isocyanates and polyisocyanates. Thus, the inventive composition very preferably comprises less than 1 % by weight, especially 0 % by weight, of crosslinkers selected from melamine resins, blocked isocyanates, blocked polyisocyanates, unblocked isocyanates, unblocked polyisocyanates and mixtures thereof.

### (iv) Organic acid (D)

The inventive coating compositions preferably comprises at least one organic acid (D) having a pKₐ value of 3 to 8, preferably of 4 to 7, very preferably of 5 to 5.5.

Said at least one organic acid (D) is favorably selected from the group consisting of citric acid, formic acid, lactic acid, ascorbic acid, benzoic acid, oxazolic acid, citric acid, acetic acid, propionic acid, neodecanoic acid and mixtures thereof, preferably neodecanoic acid.

It is preferred within the present invention if the composition comprises the at least one organic acid (D), preferably neodecanoic acid, in a total amount of 0.1 to 1% by weight, preferably 0.2 to 0.8% by weight, very preferably 0.3 to 0.7% by weight, based in each case on the total amount of the coating composition.

The additional use of the at least one organic acid (D), preferably neodecanoic acid, in the inventive coating compositions leads to a further enhancement of gloss and chemical resistance of cured coating layers prepared by such inventive coating compositions.

### (v) Organic solvent (E):

In accordance with the invention, the curable coating composition is preferably a solvent-based coating composition. Thus, the coating composition preferably comprises at least one organic solvent (E), selected from the group consisting of aliphatic hydrocarbons; aromatic hydrocarbons; ketones, such as acetone, methyl ethyl ketone and methyl amyl ketone; esters, such as ethyl acetate, butyl acetate, butylglycol acetate, pentyl acetate and ethyl ethoxy propionate; ethers; or mixtures thereof, preferably butyl acetate.

This organic solvent (E), preferably butyl acetate, is favorably present in a total amount of 15 to 60% by weight, preferably 20 to 50% by weight, more preferably 25 to 45% by weight, very preferably 30 to 40% by weight, based in each case on the total amount of the coating composition. Use of the aforementioned amounts of organic solvent, preferably butyl acetate, allows a uniform dissolution or dispersion of the components of the inventive coating composition and results in a high storage stability.

Since the inventive coating composition is preferably a solvent-based coating composition, it comprises only very small amounts of water. It is therefore preferred, if the coating composition comprises water in a total amount of 0 to 1% by weight, preferably 0 to 0.5% by weight, very preferably 0 to 0.25% by weight, based in each case on the total amount of the coating composition. The amounts of water cited previously only encompass the amount of water added intentionally. Thus, water contained in the components used to prepare the coating composition is not included in the aforementioned amounts.

The curable coating composition preferably has a pH in ethanol at 23 °C of 8.0 to 8.9.

In order to reduce environmental issues associated with the evaporation of high amounts of organic solvents during drying and crosslinking of the inventive coating composition, said composition preferably has a high solids content. This allows to reduce the VOC of the inventive coating composition. Thus, the coating composition favorably has a solids content of 30 to 80% by weight, preferably 40 to 75% by weight, very preferably 50 to 70% by weight, based in each case on the total amount of the coating composition.

### (vi) Additives (F):

The inventive coating composition can additionally comprise at least one additive (F), customary contained in coating compositions, preferably clear coating compositions. Examples of additives (F) are
- UV absorbers, for example benzotriazoles or oxalanilides,
- light stabilizers such as HALS compounds,
- free-radical scavengers,
- slip additives,
- polymerization inhibitors,
- defoamers,
- wetting agents such as siloxanes, fluorine compounds, carboxylic monoesters, phosphoric esters, polyacrylic acids and their copolymers, or polyurethanes;
- adhesion promoters such as tricyclodecanedimethanol,
- flow control agents,
- film-forming assistants such as cellulose derivatives,
- fillers such as, for example, nanoparticles based on silicon dioxide, aluminum oxide or zirconium oxide; for further details refer to Römpp Lexikon "Lacke and Druckfarben" Georg Thieme Verlag, Stuttgart, 1998, pages 250 to 252,
- rheology control additives, such as the additives known from patents WO 94/22968, EP-A-0 276 501, EP-A-0 249 201 or WO 97/12945; crosslinked polymeric microparticles, as disclosed for example in EP-A-0 008 127; inorganic phyllosilicates such as aluminum-magnesium silicates, sodium-magnesium, and sodium-magnesium-fluorine-lithium phyllosilicates of the montmorillonite type; silicas such as Aerosils^{®}; or synthetic polymers containing ionic and/or associative groups such as polyvinyl alcohol, poly(meth)acrylamide, poly(meth)acrylic acid, polyvinylpyrrolidone, styrene-maleic anhydride copolymers or ethylene-maleic anhydride copolymers and their derivatives, or hydrophobically modified ethoxylated urethanes or polyacrylates,
- flame retardants and/or
- water scavengers.

The at least one additive (F), is preferably present in a total amount of up to 30% by weight, very preferably of up to 20% by weight, based in each case on the total amount of the coating composition

The inventive coating compositions are suitable as basecoats, topcoats or primers. The inventive coating compositions can thus contain pigments, including special effect pigments, and optionally fillers.

Nonlimiting examples of special effect pigments that may be utilized in basecoat and topcoat coating compositions include metallic, pearlescent, and color-variable effect flake pigments. Metallic (including pearlescent, and color-variable) topcoat colors are produced using one or more special flake pigments. Metallic basecoat colors may be produced using metallic flake pigments like aluminum flake pigments, coated aluminum flake pigments, copper flake pigments, zinc flake pigments, stainless steel flake pigments, and bronze flake pigments and/or using pearlescent flake pigments including treated micas like titanium dioxide-coated mica pigments and iron oxide-coated mica pigments to give the coatings a different appearance (degree of reflectance or color) when viewed at different angles. Metal flakes may be cornflake type, lenticular, or circulation-resistant; micas may be natural, synthetic, or aluminum oxide type. Flake pigments do not agglomerate and are not ground under high shear because high shear would break or bend the flakes or their crystalline morphology, diminishing or destroying the gonioapparent effects. The flake pigments are satisfactorily dispersed in a binder component by stirring under low shear. The flake pigment or pigments may be included in coating composition in an amount of about 0.01 wt. % to about 50 wt. % or about 15 wt. % to about 25 wt. %, in each case based on total binder weight. Nonlimiting examples of commercial flake pigments include PALIOCROME^{®} pigments, available from BASF Corporation.

Nonlimiting examples of other suitable pigments and fillers that may be utilized in basecoat and monocoat topcoat coating compositions include inorganic pigments such as titanium dioxide, barium sulfate, carbon black, ocher, sienna, umber, hematite, limonite, red iron oxide, transparent red iron oxide, black iron oxide, brown iron oxide, chromium oxide green, strontium chromate, zinc phosphate, silicas such as fumed silica, calcium carbonate, talc, barytes, ferric ammonium ferrocyanide (Prussian blue), and ultramarine, and organic pigments such as metallized and non-metallized azo reds, quinacridone reds and violets, perylene reds, copper phthalocyanine blues and greens, carbazole violet, monoarylide and diarylide yellows, benzimidazolone yellows, tolyl orange, naphthol orange, nanoparticles based on silicon dioxide, aluminum oxide or zirconium oxide, and so on. The pigment or pigments are preferably dispersed in a resin or polymer or with a pigment dispersant, such as binder resins of the kind already described, according to known methods. In general, the pigment and dispersing resin, polymer, or dispersant are brought into contact under a shear high enough to break the pigment agglomerates down to the primary pigment particles and to wet the surface of the pigment particles with the dispersing resin, polymer, or dispersant. The breaking of the agglomerates and wetting of the primary pigment particles are important for pigment stability and color development. Pigments and fillers may be utilized in amounts typically of up to about 60% by weight, based on total weight of the coating composition. The amount of pigment used depends on the nature of the pigment and on the depth of the color and/or the intensity of the effect it is intended to produce, and also by the dispersibility of the pigments in the pigmented coating composition. The pigment content, based in each case on the total weight of the pigmented coating composition, is preferably 0.5% to 50%, more preferably 1% to 30%, very preferably 2% to 20%, and more particularly 2.5% to 10% by weight.

Particularly preferably embodiments of the inventive coating composition are in the form of transparent pigmented topcoat coating compositions (tinted clearcoats), and clearcoat coating compositions that do not include a pigment. Certain embodiments of the invention are particularly suited for stabilizing glass flakes required for making transparent pigmented topcoat coatings. The glass flakes are preferably present in an amount of 0.001 to 0.8 % by weight, based on the total weight of the coating composition. Such tinted clearcoats are being used more frequently to expand the palette of decorative effects which can be achieved when coating vehicles or other surfaces with a coating, preferably a multilayer coating.

The coatings produced from the inventive coating compositions have an outstanding degree of gloss and resistance against chemicals as well as good mechanical properties without the use of hazardous substances like isocyanates or substance releasing toxic compounds upon curing, such as melamines.

### Inventive kit-of-parts:

Since crosslinking of the components (A) and (B) starts upon addition of the catalyst (C) during storage temperatures, the inventive coating composition is preferably formulated as a 2K composition. Such compositions typically comprise at least two separate containers from which the ready-to-use coating composition is prepared by mixing prior to application.

A further subject matter of the present invention is therefore a kit-of-parts, comprising at least two separate containers C1 and C2, wherein
- the container C1 contains at least one Michael donor (A) comprising at least one thiol group and at least one Michael acceptor (B) and the container C2 contains at least one catalyst (C), or
- the container C1 contains at least one Michael donor comprising at least one thiol group (A), the container C2 contains at least one Michael acceptor (B) and the catalyst (C) is contained in container C1 and/or container C2, preferably in container C1,
characterized in that the catalyst (C) has the general formula (I) 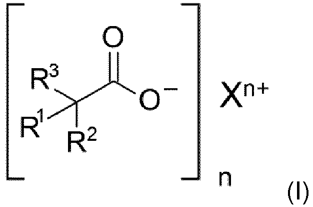 wherein
- R¹, R² and R³: are, independently from each other, linear, branched or cyclic alkyl groups, aryl groups or aralkyl groups,
- X: is selected from alkali metals, bismuth, zinc, zirconium or HN(R⁴)₃,
- R⁴: is selected from C₁-C₁₀ alkyl groups or C₁-C₁₀ hydroxyalkyl groups and
- n: is an integral number of 1 to 8.

According to a first embodiment of this subject-matter, the first container comprises a mixture of the at least one Michael acceptor (A) and the at least one Michael donor (B) while the second container comprises the at least one catalyst (C) of general formula (I).

According to a second alternative embodiment, the first container comprises the at least one Michael donor (A) and the second container comprises the at least one Michael acceptor (B). The at least one catalyst (C) of general formula (I) is present in container C1 and/or in container C2, preferably in container C1. The presence of the at least one catalyst (C) in container C1 leads to a higher reactivity of the system, thus resulting in a higher chemical resistance after shorter reaction times when compared to coating compositions prepared from the inventive kit-of-part where the catalyst is contained in container C2.

The mixing ratio of the component(s) in container C1 to the component(s) in container C2 is preferably from 2 : 1 to 1 : 0.001, preferably from 1 : 0.5 to 1 : 1 or from 1 : 0.02 to 1 : 0.005.

Further possible embodiments of this subject matter are listed below:
- container C1 contains the at least one Michael acceptor (B), container C2 contains a mixture of the at least one Michael acceptor (A) and the at least one catalyst (C) of general formula (I)
- container C1 contains the at least one catalyst (C) of general formula (I) and container C2 contains a mixture of the at least one Michael donor (A) and the at least one Michael acceptor (B)
- container C1 contains a mixture of the at least one Michael acceptor (B) and the at least one catalyst (C) of general formula (I) and container C2 contains the at least one Michael donor (A),
- container C1 contains a mixture of the at least one Michael donor (A) and the at least one catalyst (C) of general formula (I) and container C2 contains the at least one Michael acceptor (B).

What has been said about the coating composition according to the invention applies mutatis mutandis with respect to further preferred embodiments of the inventive kit-of-parts, especially with respect to preferred embodiments of the Michael donor (A), the Michael acceptor (B) and the catalyst (C).

### Inventive process for producing a multilayer coating on a substrate:

The inventive coating composition is preferably used as a clear coating composition in a process to prepare a multilayer coating on a substrate.

A third subject matter of the present invention is therefore a process for producing a multilayer coating (MC) on a substrate (S), the process comprising:
(1) optionally applying a composition (Z1) to the substrate (S) and subsequent curing of the composition (Z1) to form a cured first coating layer (S1) on the substrate (S);
(2) applying, directly to the cured first coating layer (S1) or the substrate (S),
   (a) an aqueous basecoat composition (bL2a) to form a basecoat layer (BL2a) or
   (b) at least two aqueous basecoat compositions (bL2-a) and (bL2-z) in direct sequence to form at least two basecoat layers (BL2-a) and (BL2-z) directly upon each other;
(3) applying an inventive coating composition (cc) or a coating composition prepared from the inventive kit-of-parts directly to the coating layer (BL2a) or (BL2-z) to form a clear coat layer (CL),
(4) jointly curing the basecoat layer (BL2a) and the clear coat layer (CL) or the at least two basecoat layers (BL2-a) and (BL2-z) and the clear coat layer (CL).

The substrate (S) is preferably selected from metallic substrates, metallic substrates coated with at least one cured coating and substrates comprising defects, more preferably from metallic substrates.

In this respect, preferred metallic substrates (S) are selected from iron, aluminum, copper, zinc, magnesium and alloys thereof as well as steel. Preferred substrates are those of iron and steel, examples being iron and steel substrates as used in the automobile industry sector. The substrates themselves may be of any shape - that is, for example simple metal panels or complex components such as automobile bodies and parts thereof.

Substrates having defects are preferably selected from substrates coated with multilayer coating wherein said coating has defects. Defect areas or film defects are, generally, disruptions on and in the coating, usually named according to their shape or their appearance. The skilled person knows a multiplicity of possible kinds of such film defects. Where such defect areas appear directly after OEM finishing, they are remedied directly. Hence the term OEM automotive refinish is also used. Where only small defect areas require remedy, a repair is carried out not to the whole body (double coating) but only to the "spot", as it is called. This operation is called "spot repair". Particularly preferable, therefore, is the use of the method of the invention for remedying defect areas on multicoat paint systems of the invention in automotive refinish, particularly in OEM refinish. So that the area remedied does not differ, in terms of color, from the rest of the original finish, it is preferred for the aqueous basecoat material used in stage (1) of the method of the invention to remedy defect areas to be the same as that was used for producing the multicoat paint.

The substrates (S) may be pretreated before step (1) of the inventive process or before applying the electrocoat material in any conventional way - that is cleaned and/or provided with known conversion coatings. Cleaning may be accomplished mechanically, for example, by means of wiping, sanding and/or polishing, and/or chemically by means of pickling methods, by incipient etching in acid or alkali baths, by means of hydrochloric or sulfuric acid, for example. Cleaning with organic solvents or aqueous cleaners is of course also possible. Pretreatment may likewise take place by application of conversion coatings, more particularly by means of phosphating and/or chromating, preferably phosphating. In any case, the metallic substrates are preferably conversion-coated, more particularly phosphatized, preferably provided with a zinc phosphate coat.

### Step (1):

In optional step (1) of the inventive method, a composition (Z1) is applied to the substrate (S), preferably a metallic substrate, and subsequently cured to produce a first cured layer (S1) on the substrate (S).

Suitable compositions (Z1) are electrocoating compositions which are applied electrophoretically to the substrate. Suitable electrocoat materials and their curing are described for example in WO 2017/088988 A1. The composition (Z1) applied to the substrate (or the applied, as yet uncured film) is preferably flashed off and/or preliminary dried and then cured, preferably at temperatures of 100 to 250° C, more preferably at 140 to 220° C, for a duration of 5 to 60 minutes, preferably 10 to 45 minutes, thereby producing the cured first coating layer (S1).

"Flashing" or "flash off" is understood as passive or active evaporation of organic solvents and/or water from the composition (Z1) preferably at 15 to 35°C for a duration of 0.5 to 30 minutes. After the flashing phase the first coating layer (S1) therefore comprises less water and/or solvent in comparison with the applied composition (Z1) but is not yet in the service-ready state. While it is no longer flowable it is still soft and/or tacky and is only partly dried. In particular, the composition (Z1) is not yet cured as described later on below.

In contrast, preliminary drying is understood as passive or active evaporation of organic solvents and/or water from a composition (Z1) at a higher temperature than used for flashing, for example at 40 to 90°C for a duration of 1 to 60 minutes. During preliminary drying, the applied composition (Z1) will also lose a fraction of organic solvents and/or water. Thus, compared to flashing, preliminary drying proceeds at higher temperatures meaning that there is also a higher fraction of organic solvents and/or water escaping from the applied composition (Z1). However, also preliminary drying does not result in a coating film in the service-ready state, i.e. not a cured coating film as described later.

The curing of a coating film is understood accordingly to be the conversion of such a film into the service-ready state, i.e. a state in which the substrate furnished with the coating film in question can be transported, stored, and used in its intended manner. A cured coating film is therefore no longer soft or tacky but instead is conditioned as a solid coating film which, even on further exposure to curing conditions as described later on, no longer exhibits any substantial change in its properties such as hardness or adhesion to the substrate.

The film thickness of the cured electrocoat is, for example, 10 to 40 micrometers, preferably 15 to 25 micrometers. All film thicknesses reported in the context of the present invention should be understood as dry film thicknesses. It is therefore the thickness of the cured film in each case. Hence, where it is reported that a coating material is applied at a particular film thickness, this means that the coating material is applied in such a way as to result in the stated film thickness after curing.

### Step (2):

In step (2) of the inventive method, either (a) a single a basecoat layer (BL2a) or (b) at least two directly successive basecoat layers (BL2-a) and (BL2-z) are produced. The layers are produced by (a) application of an aqueous basecoat composition (bL2a) directly to the cured first coating layer (S1), or (b) by directly successive application of at least two basecoat compositions (bL2-a) and (bL2-z) to the cured first coating layer (S1). Direct application of the basecoat composition (BL2a) or (BL2-a) on the substrate (S) results in direct contact of the basecoat layer (bL2a) or (bL2-a) and the substrate (S). Thus, there is no other coat disposed between the basecoat layer (bL2a) or (bL2-a) and the substrate (S).

The directly successive application of at least two basecoat compositions (bL2-a) and (bL2-z) to the cured first coating layer (S1) therefore means that first of all a first basecoat composition is applied directly to the layer (S1) and thereafter a second basecoat composition is applied directly to the first basecoat layer. An optional third basecoat composition can then be applied directly to the second basecoat layer. This procedure can be repeated analogously for further basecoat compositions (i.e., a fourth, fifth, etc. basecoat compositions).

The aqueous basecoat composition (bL2a) used in step (2)(a) is preferably thermochemically curable, and with more particular preference is externally crosslinking. The basecoat compositions (bL2a) is preferably a one-component coating composition. In principle, all basecoat compositions known to the skilled worker are suitable. However, preferred basecoat compositions (bL2a) comprises at least one hydroxy-functional polymer as binder, selected from the group consisting of polyacrylates (for example, hydroxyl-functional polymer comprising a dispersion), polyurethanes, polyesters, and copolymers of said polymers, examples being polyurethane-polyacrylates, and optionally at least one melamine resin as crosslinking agent.

Preferred basecoat compositions (bL2a) comprise only small amounts of less than 5 wt. %, preferably less than 2.5 wt. %, based on the total weight of the basecoat composition, of crosslinking agents such as, in particular, melamine resins. Further preferred in this embodiment is for there to be no crosslinking agents present at all. In spite of this, an outstanding quality is achieved within the overall construction. An advantage of not using crosslinking agents, and of the consequently lower complexity of the coating material, lies in the increase in the formulating freedom for the basecoat composition. The shelf life as well may be better, owing to the avoidance of possible reactions on the part of the reactive components.

The basecoat composition (bL2a) may be applied by the methods known to the skilled person for applying liquid coating materials, as for example by dipping, knife coating, spraying, rolling, or the like.

Preference is given to employing spray application methods, such as, for example, compressed air spraying (pneumatic application), airless spraying, high-speed rotation, electrostatic spray application (ESTA), optionally in conjunction with hot spray application such as hot air (hot spraying), for example. With very particular preference the basecoat composition (bL2a) is applied via pneumatic spray application or electrostatic spray application.

Following application, the applied basecoat composition (bL2a) or the corresponding basecoat layer (BL2a) is preferably subjected to flash off at 15 to 35° C for a duration of 0.5 to 30 minutes and/or to interim drying at a temperature of preferably 40 to 90° C for a duration of 1 to 60 minutes. Preference is given to initial flash off at 15 to 35° C for a duration of 0.5 to 30 minutes, followed by interim drying at 40 to 90° C for a duration of 1 to 60 minutes.

Within step (2) of the inventive method, the basecoat layer (BL2a) is not cured, i.e., it is preferably not exposed to temperatures of more than 100° C for a duration of longer than 1 minute, and more preferably is not exposed at all to temperatures of more than 100° C. Since the basecoat layer is cured only in step (4), it cannot already be cured in step (2), since in that case curing in step (4) would no longer be possible.

The aqueous basecoat compositions (bL2-a) to (bL2-z) used in step (2)(b) of the inventive method are also thermochemically curable, and with more particular preference externally crosslinking. More preferably this is the case for all basecoat compositions used in step (2)(b). Preference here is given to at least one basecoat composition being a one-component coating material, and even more preferably this is the case for all basecoat compositions used in step (2)(b). In principle, all basecoat compositions known to the skilled worker are suitable. Preferably here at least one of the basecoat compositions comprises at least one hydroxy-functional polymer as binder, selected from the group consisting of polyacrylates (for example, a hydroxy-functional polymer comprising a dispersion), polyurethanes, polyesters and copolymers of the stated polymers, as for example polyurethane-polyacrylates, and optionally at least one melamine resin as crosslinking agent. More preferably this is the case for all basecoat compositions used in step (2)(b).

Preferably, the at least one basecoat composition comprises only small amounts of less than 5 wt. %, preferably less than 2.5 wt. %, of crosslinking agents such as melamine resins in particular, based on the total weight of the basecoat material. Even more preferred in this embodiment is for there to be no crosslinking agents included at all. The aforesaid applies preferably to all of the basecoat compositions used in step (2)(b). In spite of this, an outstanding quality is achieved in the overall system. Other advantages are freedom in formulation and stability in storage.

Basecoat compositions used in step (2)(b) can be applied by the methods known to the skilled person for applying liquid coating materials, such as by dipping, knife coating, spraying, rolling or the like, for example. Preference is given to employing spray application methods, such as, for example, compressed air spraying (pneumatic application), airless spraying, high-speed rotation, electrostatic spray application (ESTA), optionally in conjunction with hot spray application such as hot air (hot spraying), for example. With very particular preference the basecoat compositions are applied via pneumatic spray application and/or electrostatic spray application.

The basecoat compositions and basecoat layers are labeled generally as (bL2-x) and (BL2-x), whereas the x may be replaced by other letters which match accordingly when designating the specific individual basecoat compositions and basecoat layers. For example, the first basecoat composition and the first basecoat layer may be labeled with a; the topmost basecoat composition and the topmost basecoat layer may be labeled with z. These two basecoat compositions and basecoat layers are present in any case in stage (2)(b). Any films between them may be given serial labeling as b, c, d and so on.

Through the application of the first basecoat material (bL2-a), accordingly, a basecoat layer (BL2-a) is produced directly on the cured first coating layer (S1). The at least one further basecoat layer (BL2-x) is then produced directly on the basecoat layers (BL2-a). Where two or more further basecoat layers are produced, they are produced in direct succession.

The basecoat compositions may be identical or different. It is also possible to produce two or more basecoat layers with the same basecoat material, and one or more further basecoat layers with one or more other basecoat materials.

The basecoat compositions applied in step (2)(b) are generally subjected, individually and/or with one another, to flash off and/or interim drying. In step (2)(b), preferably, flash off takes place at 15 to 35° C for a duration of 0.5 to 30 min and interim drying takes place at 40 to 90° C for a duration of 1 to 60 min. The sequence of flash off and/or interim drying of individual or of two or more basecoat layers may be adapted according to the requirements of the case in hand.

Favorably, the aqueous basecoat composition (bL2a) and at least one aqueous basecoat composition (bL2-x), preferably all basecoat compositions (bL2-x), are designed to provide color to the multilayer coating composition and therefore comprise at least one coloring and/or effect pigment. Such color pigments and effect pigments are known to those skilled in the art and are described, for example, in Römpp-Lexikon Lacke and Druckfarben, Georg Thieme Verlag, Stuttgart, New York, 1998, pages 176 and 451. The terms "coloring pigment" and "color pigment" are interchangeable, just like the terms "optical effect pigment" and "effect pigment".

Preferred effect pigments are, for example, platelet-shaped metal effect pigments such as lamellar aluminum pigments, gold bronzes, oxidized bronzes and/or iron oxide-aluminum pigments, pearlescent pigments such as pearl essence, basic lead carbonate, bismuth oxide chloride and/or metal oxide-mica pigments and/or other effect pigments such as lamellar graphite, lamellar iron oxide, multilayer effect pigments composed of PVD films and/or liquid crystal polymer pigments. Particularly preferred are lamellar metal effect pigments, more particularly lamellar aluminum pigments.

Typical color pigments especially include inorganic coloring pigments such as white pigments such as titanium dioxide, zinc white, zinc sulfide or lithopone; black pigments such as carbon black, iron manganese black, or spinel black; chromatic pigments such as chromium oxide, chromium oxide hydrate green, cobalt green or ultramarine green, cobalt blue, ultramarine blue or manganese blue, ultramarine violet or cobalt violet and manganese violet, red iron oxide, cadmium sulfoselenide, molybdate red or ultramarine red; brown iron oxide, mixed brown, spinel phases and corundum phases or chromium orange; or yellow iron oxide, nickel titanium yellow, chromium titanium yellow, cadmium sulfide, cadmium zinc sulfide, chromium yellow or bismuth vanadate.

The fraction of the pigments is preferably situated in the range from 1.0 to 40.0 wt. %, preferably 2.0 to 35.0 wt. %, more preferably 5.0 to 30.0 wt. %, based on the total weight of the aqueous basecoat composition in each case.

The aqueous basecoat composition preferably further comprises at least one polymer as binder that is different from the polymers present in the dispersions (D), more particularly at least one polymer selected from the group consisting of polyurethanes, polyesters, polyacrylates and/or copolymers of the stated polymers, more particularly polyesters and/or polyurethane polyacrylates. Preferred polyesters are described, for example, in DE 4009858 A1 in column 6, line 53 to column 7, line 61 and column 10, line 24 to column 13, line 3, Or WO 2014/033135 A2, page 2, line 24 to page 7, line 10 and page 28, line 13 to page 29, line 13. Preferred polyurethane polyacrylate copolymers (acrylated polyurethanes) and their preparation are described in, for example, WO 91/15528 A1, page 3, line 21 to page 20, line 33, and DE 4437535 A1, page 2, line 27 to page 6, line 22. The described polymers as binders are preferably hydroxy-functional and especially preferably possess an OH number in the range from 15 to 200 mg KOH/g, more preferably from 20 to 150 mg KOH/g. The basecoat materials more preferably comprise at least one hydroxy-functional polyurethane polyacrylate copolymer, more preferably still at least one hydroxy-functional polyurethane polyacrylate copolymer and also at least one hydroxy-functional polyester.

The proportion of the further polymers as binders may vary widely and is situated preferably in the range from 1.0 to 25.0 wt. %, more preferably 3.0 to 20.0 wt. %, very preferably 5.0 to 15.0 wt. %, based in each case on the total weight of the basecoat composition.

The basecoat composition may further comprise at least one typical crosslinking agent known per se. If it comprises a crosslinking agent, said agent comprises preferably at least one aminoplast resin and/or at least one blocked polyisocyanate, preferably an aminoplast resin. Among the aminoplast resins, melamine resins in particular are preferred.

If the basecoat composition does comprise crosslinking agents, the proportion of these crosslinking agents, more particularly aminoplast resins and/or blocked polyisocyanates, very preferably aminoplast resins and, of these, preferably melamine resins, is preferably in the range from 0.5 to 20.0 wt. %, more preferably 1.0 to 15.0 wt. %, very preferably 1.5 to 10.0 wt. %, based in each case on the total weight of the basecoat composition.

The basecoat composition may further comprise at least one thickener. Suitable thickeners are inorganic thickeners from the group of the phyllosilicates such as lithium aluminum magnesium silicates. Likewise, the basecoat material may preferably comprise at least one organic thickener, as for example a (meth)acrylic acid(meth)acrylate copolymer thickener or a polyurethane thickener. Employed for example here may be conventional organic associative thickeners, such as the known associative polyurethane thickeners, for example. Associative thickeners, as is known, are termed water-soluble polymers which have strongly hydrophobic groups at the chain ends or in side chains, and/or whose hydrophilic chains contain hydrophobic blocks or concentrations in their interior. As a result, these polymers possess a surfactant character and are capable of forming micelles in aqueous phase. In similarity with the surfactants, the hydrophilic regions remain in the aqueous phase, while the hydrophobic regions enter into the particles of polymer dispersions, adsorb on the surface of other solid particles such as pigments and/or fillers, and/or form micelles in the aqueous phase. Ultimately a thickening effect is achieved, without any increase in sedimentation behavior.

Thickeners as stated are available commercially. The proportion of the thickeners is preferably in the range from 0.1 to 5.0 wt. %, more preferably 0.2 to 3.0 wt. %, very preferably 0.3 to 2.0 wt. %, based in each case on the total weight of the basecoat composition.

The basecoat composition may further comprise at least one adjuvant. Examples of such adjuvants are salts which are thermally decomposable without residue or substantially without residue, polymers as binders that are curable physically, thermally and/or with actinic radiation and that are different from the polymers already stated as binders, further crosslinking agents, organic solvents, reactive diluents, transparent pigments, fillers, molecularly dispersedly soluble dyes, nanoparticles, light stabilizers, antioxidants, deaerating agents, emulsifiers, slip additives, polymerization inhibitors, initiators of radical polymerizations, adhesion promoters, flow control agents, film-forming assistants, sag control agents (SCAs), flame retardants, corrosion inhibitors, waxes, siccatives, biocides, and matting agents. Such adjuvants are used in the customary and known amounts.

The solids content of the basecoat material composition may vary according to the requirements of the case in hand. The solids content is guided primarily by the viscosity that is needed for application, more particularly spray application. A particular advantage is that the basecoat material for inventive use, for comparatively high solids contents, is able nevertheless to have a viscosity which allows appropriate application.

The solids content of the basecoat material is preferably at least 16.5%, more preferably at least 18.0%, even more preferably at least 20.0%.

Under the stated conditions, in other words at the stated solids contents, preferred basecoat compositions have a viscosity of 40 to 150 mPa*s, more particularly 70 to 120 mPa*s, at 23° C under a shearing load of 1000 s⁻¹. For the purposes of the present invention, a viscosity within this range under the stated shearing load is referred to as spray viscosity (working viscosity). As is known, coating materials are applied at spray viscosity, meaning that under the conditions then present (high shearing load) they possess a viscosity which in particular is not too high, so as to permit effective application. This means that the setting of the spray viscosity is important, in order to allow a paint to be applied at all by spray methods, and to ensure that a complete, uniform coating film is able to form on the substrate to be coated.

The basecoat composition is aqueous. The fraction of water in the basecoat composition is preferably from 35 to 70 wt. %, and more preferably 45 to 65 wt. %, based in each case on the total weight of the basecoat composition.

Even more preferred is for the percentage sum of the solids content of the basecoat composition and the fraction of water in the basecoat composition to be at least 70 wt. %, preferably at least 75 wt. %. Among these figures, preference is given to ranges of 75 to 95 wt. %, in particular 80 to 90 wt. %.

This means in particular that preferred basecoat composition comprise components that are in principle a burden on the environment, such as organic solvents in particular, in relation to the solids content of the basecoat composition, at only low fractions. The ratio of the volatile organic fraction of the basecoat composition (in wt. %) to the solids content of the basecoat composition (in analogy to the representation above, here in wt. %) is preferably from 0.05 to 0.7, more preferably from 0.15 to 0.6. In the context of the present invention, the volatile organic fraction is considered to be that fraction of the basecoat composition that is considered neither part of the water fraction nor part of the solids content.

A number of preferred variants of the basecoat layer sequences for the basecoat compositions used in step (2)(b) is described in the following.
It is possible to produce a first basecoat layer (BL2-a) by, for example, electrostatic spray application (ESTA) or pneumatic application of a first basecoat composition (bL2-a) directly on the cured first coating layer (S1), to carry out flashing and/or interim drying thereon as described above, and subsequently to produce a second basecoat layer (BL2-z) by direct application of a second basecoat composition (bL2-z), different from the first basecoat composition (bL2-a). The second basecoat composition (bL2-z) may also be applied by electrostatic spray application or by pneumatic application, thereby producing a second basecoat layer (BL2-z) directly on the first basecoat layer (BL2-a). Between and/or after the applications it is of course possible to carry out flashing and/or interim drying again. This variant of stage (2)(b) is selected preferably when first of all a color-preparatory basecoat layer is to be produced directly on the first coating layer (S1), and then a color- and/or effect-imparting basecoat layer (BL2-z) is to be produced directly on the first basecoat layer. It is likewise possible, for example, to apply this second basecoat composition as described above in two stages, thereby forming two further, directly successive basecoat layers, both based on the same basecoat composition, directly on the first basecoat layer.

It is likewise possible for three basecoat layers to be produced in direct succession directly on the cured layer (S1), with the basecoat layers being based on three different basecoat compositions. For example, a color-preparatory basecoat layer, a further layer based on a color- and/or effect-imparting basecoat composition, and a further layer based on a second color- and/or effect-imparting basecoat composition may be produced. Between and/or after the individual applications and/or after all three applications, it is possible in turn to carry out flashing and/or interim drying.

Embodiments preferred in the context of the present invention therefore comprise the production in stage (2)(b) of inventive method of two or three basecoat layers. In that case it is preferred for the basecoat layer produced directly on the cured layer (S1) to be based on a color-preparatory basecoat composition. The second and any third layer are based either on one and the same color- and/or effect-imparting basecoat composition, or on a first color- and/or effect-imparting basecoat composition and on a different second color- and/or effect-imparting basecoat material. In the preferred variants of stage (2)(b) of the method of the invention, described earlier on above, a first basecoat composition (bL2-a) is first of all applied, and may also be termed a color-preparatory basecoat material. It therefore serves as a base for at least one color and/or effect basecoat film that then follows, this being a film which is then able optimally to fulfill its function of imparting color and/or effect.

In one particular embodiment, a color-preparatory basecoat composition is substantially free from chromatic pigments and effect pigments. More particularly preferably a basecoat composition of this kind contains less than 2 wt. %, preferably less than 1 wt. %, of chromatic pigments and effect pigments, based in each case on the total weight of the aqueous basecoat composition. In this embodiment the color-preparatory composition material preferably comprises black and/or white pigments, especially preferably both kinds of these pigments. It comprises preferably 5 to 30 wt. %, preferably 10 to 25 wt. %, of white pigments, and 0.01 to 1.00 wt. %, preferably 0.1 to 0.5 wt. %, of black pigments, based in each case on the total weight of the basecoat composition. The resultant white, black, and more particularly gray color, which can be adjusted in different lightness stages through the ratio of white pigments and black pigments, represents an individually adaptable basis for the basecoat film system that then follows, allowing the color and/or the effect imparted by the subsequent basecoat system to be manifested optimally. The pigments are known to the skilled person and have also been described earlier on above. A preferred white pigment here is titanium dioxide, a preferred black pigment carbon black. As already described, however, this basecoat composition may of course also comprise chromatic and/or effect pigments. This variant is appropriate especially when the resultant multicoat paint system is to have a highly chromatic hue, as for example a very deep red or yellow. Where pigments in appropriately chromatic hue are also added to the color-preparatory basecoat material, a further improved coloration can be achieved.

The color and/or effect basecoat composition(s) for the second basecoat layer or for the second and third basecoat layers within this embodiment are adapted in accordance with the ultimately desired coloration of the overall system. Where the desire is for a white, black, or gray color, the at least one further basecoat composition comprises the corresponding pigments and in terms of the pigment composition ultimately resembles the color-preparatory basecoat composition. Where the desire is for a chromatic and/or effect paint system, as for example a chromatic solid-color paint system or a metallic-effect paint system, corresponding chromatic and/or effect pigments are used in amounts of, for example, 1 to 15 wt. %, preferably 3 to 10 wt. %, based in each case on the total weight of the basecoat composition. Chromatic pigments belong to the group of color pigments, the latter also encompassing achromatic color pigments such as black or white pigments. Basecoat composition of this kind may of course also include black and/or white pigments as well for the purpose of lightness adaptation.

Within step (2)(b) of the inventive method, the basecoat layers (BL2-x) are not cured - that is, they are preferably not exposed to temperatures of more than 100° C for a duration of longer than 1 minute, and preferably not to temperatures of more than 100° C at all.

The basecoat compositions (bL2a) or (bL2-a) and (bL2-z) are applied such that the basecoat layer (BL2a), and the individual basecoat layers (BL2-a) and (BL2-z), after the curing has taken place in step (4), have a film thickness of, for example, 5 to 50 micrometers, preferably 6 to 40 micrometers, especially preferably 7 to 35 micrometers. In step (2)(a), preference is given to production of higher film thicknesses of 15 to 50 micrometers, preferably 20 to 45 micrometers. In stage (2)(b), the individual basecoat layers tend to have lower film thicknesses by comparison, the overall system then again having film thicknesses which lie within the order of magnitude of the one basecoat layer (BL2a). In the case of two basecoat layers, for example, the first basecoat layer (BL2-a) preferably has film thicknesses of 5 to 35, more particularly 10 to 30, micrometers, and the second basecoat layer (BL2-z) preferably has film thicknesses of 5 to 35 micrometers, more particularly 10 to 30 micrometers, with the overall film thickness not exceeding 50 micrometers.

### Step (3):

In step (3) of the inventive process, a clearcoat layer (CL) is produced directly on the uncured basecoat layer (BL2a) or (BL2-z). This production is accomplished by corresponding application of an inventive clearcoat composition (cc) or a clearcoat composition prepared by the inventive kit-of-parts. Direct application of the clearcoat composition (cc) on the uncured second coating layer (BL2a) or (BL2-z) results in direct contact of the coating layer (BL2a) or (BL2-z) and the clear coating film (CC).

The inventive clearcoat composition (cc) can be applied by methods known to the skilled person for applying liquid coating materials, for example by dipping, knife coating, spraying, rolling, or the like. Preference is given to employing spray application methods, such as compressed air spraying (pneumatic application) and electrostatic spray application (ESTA).

The clearcoat composition (cc) or the corresponding clearcoat layer (CC) is subjected to flash off and/or interim-drying after application, preferably at 15 to 35° C for a duration of 0.5 to 30 minutes.

The clearcoat composition (cc) is applied in such a way that the clearcoat layer after the curing has taken place in step (4) has a film thickness of, for example, 15 to 80 µm, preferably 20 to 65 µm, very preferably 25 to 60 µm.

The process of the invention does not exclude the presence of further coating materials, as for example further clearcoat materials being applied after the application of the inventive clearcoat composition (cc) and further clearcoat layers being produced this way. Such further coating layers are then likewise cured in step (4) described below. Preferably, however, only the inventive clearcoat composition (cc) is applied and then cured as described in step (4).

### Step (4):

In step (4) of the process of the invention joint curing of any uncured coating layer, particularly coating layers produced in steps (2) and (3) of the inventive method, is performed.

The joint curing preferably takes place at temperatures of 80 to 160°C for a period of 15 to 35 minutes.

The statements made above, however, do not rule out that the aqueous basecoat composition(s) as well as the inventive clearcoat composition (cc) can additionally be cured under further curing conditions.

The process of the invention allows to produce multilayer coatings on substrates without a separate curing step. Nevertheless, application of the process of the invention results in multilayer coatings which exhibit a high gloss and a good chemical resistance .

What has been said about the coating composition and the kit-of-parts according to the invention applies mutatis mutandis with respect to further preferred embodiments of the inventive process, especially with respect to preferred embodiments of the inventive clearcoat composition and kit-of-parts.

### Inventive multilayer coating:

The result after the end of step (4) of the process of the invention is a multilayer effect and/or color coating of the invention.

What has been said about the coating composition according to the invention, the inventive kit-of-parts and the inventive process applies mutatis mutandis with respect to further preferred embodiments of the multilayer effect and/or color coating of the present invention.

### Inventive use of compound (C):

A final subject-matter of the present invention is the use of specific salts of carboxylic acids as catalyst in a Michael addition reaction, namely the use of at least one compound (C) of formula (I) 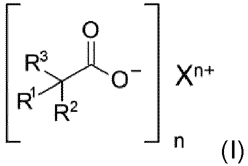 wherein
- R¹, R² and R³: are, independently, linear, branched or cyclic alkyl groups, aryl groups or aralkyl groups,
- X: is selected from alkali metals, bismuth, zinc, zirconium or HN(R⁴)₃,
- R⁴: is selected from C₁-C₁₀ alkyl groups or C₁-C₁₀ hydroxyalkyl groups and
- n: is an integral number of 1 to 8,
as catalyst in the reaction between at least one Michael donor (A) comprising at least one thiol group and at least one Michael acceptor (B).

The inventive use leads to a high crosslinking density upon reaction of the Michael donor (A) and the Michael acceptor (B) and thus results in coating layers having a high gloss as well as a high chemical resistance. Moreover, the mechanical properties are outstanding. Additionally, the crosslinking reaction takes place without the use of formaldehyde releasing melamine crosslinkers or toxic and highly reactive isocyanate crosslinkers.

What has been said about the coating composition according to the invention, the inventive kit-of parts and the inventive process applies mutatis mutandis with respect to further preferred embodiments of the inventive use.

The invention is described in particular by the following embodiments:
Embodiment 1: a curable coating composition comprising:
   (i) at least one Michael donor (A) comprising at least one thiol group,
   (ii) at least one Michael acceptor (B) and
   (iii) at least one catalyst (C) according to the general formula (I) 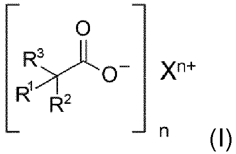
   wherein
   - R¹, R² and R³: are, independently from each other, linear, branched or cyclic alkyl groups, aryl groups or aralkyl groups,
   - X: is selected from alkali metals, bismuth, zinc, zirconium or HN(R4)3,

   - R⁴: is selected from C₁-C₁₀ alkyl groups or C₁-C₁₀ hydroxyalkyl groups and
   - n: is an integral number of 1 to 8.
Embodiment 2: curable coating composition according to embodiment 1, wherein the at least one Michael donor (A) comprises 2 to 10, preferably 2 to 8, more preferably 3 to 6, very preferably 4 thiol groups.
Embodiment 3: curable coating composition according to embodiment 1 or 2, wherein the at least one Michael donor (A) has a thiol content of 10 to 45% by weight, preferably 15 to 40% by weight, more preferably 20 to 35% by weight, very preferably 22 to 30% by weight, based on the total weight of the Michael donor (A) and measured by iodometric titration.
Embodiment 4: curable coating composition according to any of the preceding embodiments, wherein the at least one Michael donor (A) has an active hydrogen equivalent weight of 100 to 150 g/mol, preferably 110 to 140 g/mol, more preferably 115 to 135 g/mol, very preferably 120 to 130 g/mol.
Embodiment 5: curable coating composition according to any of the preceding embodiments, wherein the at least one Michael donor (A) comprises at least one functional group of formula (II) 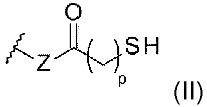 wherein
   - Z: is oxygen, a nitrogen-containing group or an alkyl, aryl, aralkyl or alkaryl radical, preferably oxygen, and
   - p: is an integral number of 1 to 6, preferably 1 to 4, more preferably 1 to 3, very preferably 2.
Embodiment 6: curable coating composition according to any of the preceding embodiments, wherein the composition comprises at least one Michael donor (A) of formula (III) 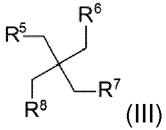 wherein
   - R⁵ to R⁸: are, independently from each other, selected from hydrogen, hydroxy, C₁-C₁₀ alkylene groups, C₁-C₁₀ thioalkylene groups, C₂-C₁₀ hydroxy alkylene groups, C₂-C₁₀ hydroxy thioalkylene groups and residues *-O-C(O)-(CH₂)_{q}-SH with the proviso that at least one of R⁵ to R⁸ contains a thiol group and
   - q: is an integral number of 1 to 10.
Embodiment 7: curable coating composition according to embodiment 6, wherein R⁵ to R⁸ are, independently from each other, a residue *-O-C(O)-(CH₂)_{q}-SH with q being an integral number of 2.
Embodiment 8: curable coating composition according to any of the preceding embodiments, wherein the composition comprises the at least one Michael donor (A) in a total amount of 10 to 50% by weight, preferably 15 to 45% by weight, more preferably 18 to 30% by weight, very preferably 20 to 25% by weight, based in each case on the total weight of the composition.
Embodiment 9: curable coating composition according to any of the preceding embodiments, wherein the at least one Michael acceptor (B) comprises at least one carbon-carbon double bond, preferably 2 to 12 carbon-carbon double bond double bonds, more preferably 4 to 8 carbon-carbon double bonds, very preferably 6 carbon-carbon double bonds.
Embodiment 10: curable coating composition according to any of the preceding embodiments, wherein the at least one Michael acceptor (B) comprises at least one functional group, preferably 6 functional groups, of the general structure (IV) 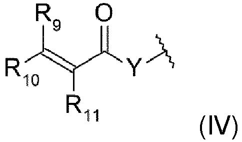 wherein
   - R⁹ to R¹¹: are, independently from each other, selected from hydrogen, linear, branched or cyclic alkyl radicals, aryl radicals, aralkyl radicals and alkaryl radicals, wherein said radicals can optionally contain ether linkages, carboxyl groups, further carbonyl groups, nitrogen-containing groups or combinations thereof and
   - Y: is oxygen, a nitrogen-containing group or an alkyl, aryl, aralkyl or alkaryl radical described for R⁹, R¹⁰ and R¹¹.
Embodiment 11: curable coating composition according to embodiment 10, wherein residues R⁹ to R¹¹ in formula (IV) are, independently from each other, selected from hydrogen.
Embodiment 12: Curable coating composition according to embodiments 10 or 11, wherein Y in formula (IV) is oxygen.
Embodiment 13: curable coating composition according to any of the preceding embodiments, wherein the at least one Michael acceptor (B) has an average molecular weight M_{w} of 500 to 2,000 g/mol, preferably 800 to 1,500 g/mol, very preferably 1,100 to 1,300 g/mol, measured according to GPC in accordance with DIN EN ISO 13885-1:2008-08.
Embodiment 14: curable coating composition according to any of the preceding embodiments, wherein the at least one Michael acceptor (B) has a glass transition temperature T_{g} of 20 to 55 °C, preferably 35 to 45 °C, measured by differential scanning calorimetry (DSC) using a heating rate of 10 K/min.
Embodiment 15: curable coating composition according to any of the preceding embodiments, wherein the at least one Michael acceptor (B) is selected from the group consisting of aliphatic urethane (meth)acrylate polymers, acrylic polymers comprising (meth)acrylate groups or mixtures thereof, preferably aliphatic urethane (meth)acrylate polymers.
Embodiment 16: curable coating composition according to embodiment 15, wherein the aliphatic urethane (meth)acrylate polymer is obtained by reacting
   (i) at least one compound containing at least two isocyanate groups,
   (ii) at least one hydroxy-functional compound which further contains at least one ethylenically unsaturated group and
   (iii) optionally further compounds containing NCO-reactive groups.
Embodiment 17: curable coating composition according to embodiment 16, wherein compound (i) is selected from the group consisting of organic aliphatic, aromatic or cycloaliphatic di- or polyisocyanates, oligomers of said di- or polyisocyanates or mixtures thereof.
Embodiment 18: curable coating composition according to embodiments 16 or 17, wherein the ethylenically unsaturated group of compound (ii) is selected from the group consisting of vinyl ether, maleyl, fumaryl, maleimide, dicyclopentadienyl, acrylamide and (meth)acrylic groups, very preferably (meth)acrylic groups.
Embodiment 19: curable coating composition according to any of embodiments 16 to 18, wherein compound (ii) is selected from the group consisting of 2-hydroxyethyl(meth)acrylate, polyethylene oxide mono(meth)acrylate, polypropylene oxide mono(meth)acrylate, polyalkylene oxide mono(meth)acrylate, poly(ε-caprolactone)mono(meth)acrylates, ε-caprolactone (meth)acrylates, 2-hydroxypropyl(meth)acrylate, 4-hydroxybutyl(meth)acrylate, hydroxybutyl vinyl ether, 3-hydroxy-2,2-dimethylpropyl(meth)acrylate, glyceryl di(meth)acrylate, trimethylolpropane di(meth)acrylate, pentaerythritol tri(meth)acrylate, dipentaerythritol penta(meth)acrylate, (meth)acrylates of aliphatic polybasic acids or aliphatic polyols and mixtures thereof.
Embodiment 20: curable coating composition according to any of embodiments 16 to 19, wherein compound (iii) selected from the group consisting of polyether polyols, polyester polyols, polycarbonate polyols, polyhydric alcohols and mixtures thereof.
Embodiment 21: Curable coating composition according to any of embodiments 16 to 20, wherein a catalyst is used which is selected from the group consisting of zinc octoate, zinc acetylacetonate, zinc 2-ethylcaproate, N,N,N-trimethyl-N-2-hydroxypropylammonium hydroxide, N,N,N-trimethyl-N-2-hydroxypropylammonium 2-ethylhexanoate, choline 2-ethylhexanoate, tetrabutylammonium 2-ethylhexanoate, tetrabutylammonium pivalate, choline pivalate, methylcholine 2-ethylhexanoate, methylcholine pivalate and mixtures thereof.
Embodiment 22: curable coating composition according to any of embodiments 16 to 21, wherein the ratio of NCO groups of the at least one compound (i) to the OH groups of the at least one compound (ii) is 1.45:1.0 to 1.1:1.0, preferably 1.43:1.0 to 1.2:1.0, very preferably 1.35:1.0 to 1.3:1.0.
Embodiment 23: curable coating composition according to any of the preceding embodiments, wherein the coating composition comprises the at least one Michael acceptor (B) in a total amount of 20 to 55% by weight, preferably by 25 to 50% by weight, more preferably 28 to 45% by weight, very preferably 30 to 40% by weight, based in each case on the total weight of the coating composition.
Embodiments 24: curable coating composition according to any of the preceding embodiments, wherein the coating composition comprises a weight ratio of the at least one Michael donor (A) to the at least one Michael acceptor (B) of 3 : 1 to 1 : 3, preferably 1.7 : 1 to 1.4 : 1.
Embodiment 25: curable coating composition according to any of the preceding embodiments, wherein the residues R¹, R² and R³ in formula (I) are, independently from each other, linear or branched C₁-C₁₀ alkyl groups with the proviso that the sum of all carbon atoms of residues R¹, R² and R³ is 8.
Embodiment 26: curable coating composition according to any of the preceding embodiments, wherein the residues R¹ and R² in formula (I) are, independently from each other, linear or branched C₃-C₅ alkyl groups and residue R³ is a methyl group, with the proviso that the sum of all carbon atoms of residues R¹, R² and R³ is 8.
Embodiment 27: curable coating composition according to any of the preceding embodiments, wherein X in formula (I) is selected from the group consisting of lithium, sodium, potassium, bismuth, zinc, zirconium and HN(R⁴)₃ with R⁴ being *-(CH₂)₂-OH. Embodiment 28: curable coating composition according to any of the preceding embodiments, wherein n in formula (I) is an integral number of 1 to 4.
Embodiment 29: curable coating composition according to any of the preceding embodiments, wherein the at least one catalyst (C) of formula (I) comprises a metal content of 3 to 40% by weight, preferably 3.5 to 30% by weight, very preferably 4.5 to 26% by weight, based in each case on the total weight of the catalyst (C).
Embodiment 30: curable coating composition according to any of the preceding embodiments, wherein the coating composition comprises the at least one catalyst (C) of formula (I) in a total amount of 0.05 to 6% by weight, preferably by 0.08 to 2.5% by weight, more preferably 0.1 to 1.5% by weight, very preferably 0.2 to 0.7% by weight, based in each case on the total weight of the coating composition.
Embodiment 31: curable coating composition according to any of the preceding embodiments, wherein the composition comprises at least 2 different catalysts (C) of formula (I), preferably precisely 3 different catalysts (C) of formula (I) or precisely 4 different catalysts (C) of formula (I).
Embodiment 32: curable coating composition according to any of the preceding embodiments, wherein the composition comprises at least one catalyst (C1-1) of formula (Ia) and at least one catalyst (C1-2) of formula (Ib) and at least one catalyst (C1-3) of formula (Ic) 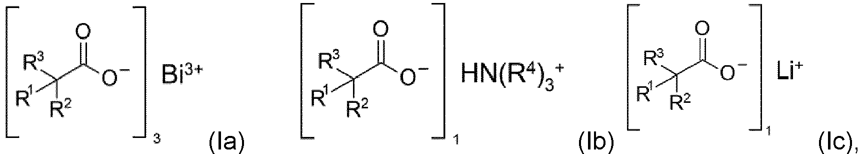 wherein
   - R¹ and R²: are, independently from each other, linear or branched C₃-C₅ alkyl groups,
   - R³: is a methyl group with the proviso that the sum of all carbon atoms of residues R¹, R² and R³ is 8 and
   - R⁴: is a residue *-(CH₂)₂-OH.
Embodiment 33: curable coating composition according to any of embodiments 1 to 31, wherein the composition comprises at least one catalyst (C1-1) of formula (Ia) and at least one catalyst (C1-2) of formula (Ib) and at least one catalyst (C1-3) of formula (Ic) 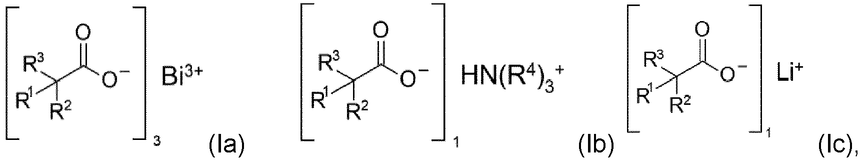 wherein
   - R¹ and R²: are, independently from each other, phenyl groups,
   - R³: is a C₁-C₁₂-alkyl group, preferably a C₆-C₁₀-alkyl group, especially a C₈-alkyl group and
   - R⁴: is a residue *-(CH₂)₂-OH.
Embodiment 34: curable coating composition according to embodiment 32 or 33, wherein the at least one catalyst (C1-1) of formula (Ia) comprises a bismuth content of 10 to 40% by weight, preferably 15 to 30% by weight, very preferably 22 to 25% by weight, based in each case on the total weight of the catalyst (C1-1).
Embodiment 35: curable coating composition according to any of embodiments 32 to 34, wherein the at least one catalyst (C1-2) of formula (Ib) comprises a content of the ion HN(R⁴)₃⁺ of 10 to 30% by weight, preferably 15 to 25% by weight, very preferably 18 to 22% by weight, based in each case on the total weight of the catalyst (C1-2).
Embodiment 36: curable coating composition according to any of embodiments 32 to 35, wherein the at least one catalyst (C1-3) of formula (Ic) comprises a lithium content of 0.1 to 10% by weight, preferably 0.5 to 5% by weight, very preferably 1 to 3% by weight, based in each case on the total weight of the catalyst (C1-3).
Embodiment 37: curable coating composition according to any of embodiments 32 to 36, wherein the coating composition comprises the at least one catalyst (C1-1) of formula (Ia) in a total amount of 0.01 to 1% by weight, very preferably 0.05 to 0.2% by weight, based in each case on the total weight of the coating composition. Embodiment 38: curable coating composition according to any of embodiments 32 to 37, wherein the coating composition comprises the at least one catalyst (C1-2) of formula (Ib) in a total amount of 0.05 to 1% by weight, very preferably 0.15 to 0.4% by weight, based in each case on the total weight of the coating composition.
Embodiment 39: curable coating composition according to any of embodiments 32 to 38, wherein the coating composition comprises the at least one catalyst (C1-3) of formula (Ic) in a total amount of 0.05 to 1% by weight, very preferably 0.15 to 0.25% by weight, based in each case on the total weight of the coating composition.
Embodiment 40: curable coating composition according to any of embodiments 31 to 39, wherein the coating composition comprises a weight ratio of the at least one catalyst (C1-1) to the at least one catalyst (C1-2) and to the at least one catalyst (C1-3) of 1 : 1 : 1 to 1 : 5 : 3, preferably of 1 : 2 : 1.5 to 1 : 3 : 2.
Embodiment 41: Curable coating composition according to any of embodiments 1 to 31, wherein the composition comprises at least one catalyst (C2-1) of formula (IIa), at least one catalyst (C2-2) of formula (IIb), at least one catalyst (C2-3) of formula (IIc) and at least one catalyst (C2-4) of formula (IId) 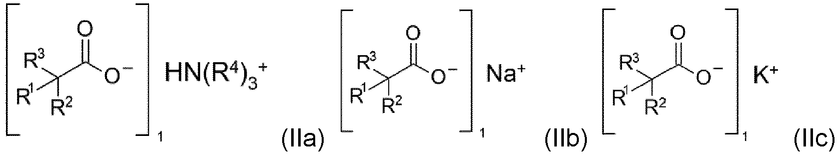 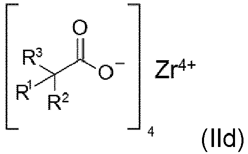 wherein
   - R¹ and R²: are, independently from each other, linear or branched C₃-C₅ alkyl groups,
   - R³: is a methyl group with the proviso that the sum of all carbon atoms of residues R¹, R² and R³ is 8 and
   - R⁴: is a residue *-(CH₂)₂-OH.
Embodiment 42: Curable coating composition according to any of embodiments 1 to 31, wherein the composition comprises at least one catalyst (C2-1) of formula (IIa), at least one catalyst (C2-2) of formula (IIb), at least one catalyst (C2-3) of formula (IIc) and at least one catalyst (C2-4) of formula (IId) 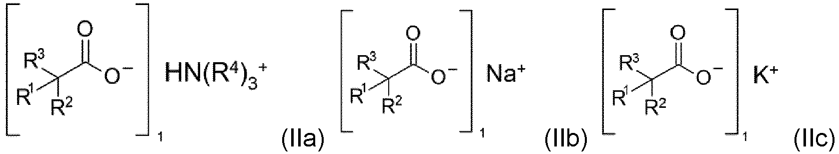 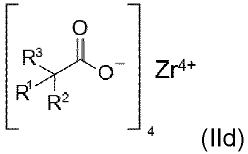 wherein
   - R¹ and R²: are, independently from each other, phenyl groups,
   - R³: is a C₁-C₁₂-alkyl group, preferably a C₆-C₁₀-alkyl group, especially a C₈-alkyl group and
   - R⁴: is a residue *-(CH₂)₂-OH.
Embodiment 43: curable coating composition according to embodiment 41 or 42, wherein the at least one catalyst (C2-1) of formula (IIa) comprises a content of the ion HN(R⁴)₃⁺ of 10 to 30% by weight, preferably 15 to 25% by weight, very preferably 18 to 22% by weight, based in each case on the total weight of the catalyst (C2-1).
Embodiment 44: curable coating composition according to any of embodiments 41 to 43, wherein the at least one catalyst (C2-2) of formula (IIb) comprises a sodium content of 1 to 15% by weight, preferably 3 to 10% by weight, very preferably 4 to 8% by weight, based in each case on the total weight of the catalyst (C2-2).
Embodiment 45: curable coating composition according to any of embodiments 41 to 44, wherein the at least one catalyst (C2-3) of formula (IIc) comprises a potassium content of 5 to 20% by weight, preferably 7 to 15% by weight, very preferably 9 to 12% by weight, based in each case on the total weight of the catalyst (C2-3).
Embodiment 46: curable coating composition according to any of embodiments 41 to 45, wherein the at least one catalyst (C2-4) of formula (IId) comprises a zirconium content of 10 to 40% by weight, preferably 15 to 30% by weight, very preferably 20 to 25% by weight, based in each case on the total weight of the catalyst (C2-4).
Embodiment 47: curable coating composition according to any of embodiments 41 to 46, wherein the coating composition comprises the at least one catalyst (C2-1) of formula (IIa) in a total amount of 0.05 to 1% by weight, very preferably 0.15 to 0.4% by weight, based in each case on the total weight of the coating composition.
Embodiment 48: curable coating composition according to any of embodiments 41 to 47, wherein the coating composition comprises the at least one catalyst (C2-2) of formula (IIb) in a total amount of 0.005 to 0.5% by weight, very preferably 0.01 to 0.05% by weight, based in each case on the total weight of the coating composition.
Embodiment 49: curable coating composition according to any of embodiments 41 to 48, wherein the coating composition comprises the at least one catalyst (C2-3) of formula (IIc) in a total amount of 0.01 to 0.5% by weight, very preferably 0.05 to 0.15% by weight, based in each case on the total weight of the coating composition.
Embodiment 50: curable coating composition according to any of embodiments 41 to 49, wherein the coating composition comprises the at least one catalyst (C2-4) of formula (IId) in a total amount of 0.01 to 0.5% by weight, very preferably 0.04 to 0.1% by weight, based in each case on the total weight of the coating composition.
Embodiment 51: curable coating composition according to any of embodiments 31 and 41 to 50, wherein the coating composition comprises a weight ratio of the at least one catalyst (C2-1) to the at least one catalyst (C2-2) to the at least one catalyst (C2-3) to the at least one catalyst (C2-4) of 15 : 1 : 6 : 4 to 5 : 1 : 1 : 1, preferably 10 : 1 : 4 : 2 to 6: 1 : 2 : 1.
Embodiment 52: curable coating composition according to any of the preceding embodiments, wherein the coating composition further comprises at least one organic acid (D) having a pKₐ value of 3 to 8, preferably of 4 to 7, very preferably of 5 to 5.5. Embodiment 53: curable coating composition according to embodiment 50, wherein the at least one organic acid (D) is selected from the group consisting of citric acid, formic acid, lactic acid, ascorbic acid, benzoic acid, oxazolic acid, citric acid, acetic acid, propionic acid, neodecanoic acid and mixtures thereof, preferably neodecanoic acid.
Embodiment 54: curable coating composition according to embodiment 52 or 53, wherein the composition comprises the at least one organic acid (D), preferably neodecanoic acid, in a total amount of 0.1 to 1% by weight, preferably 0.2 to 0.8% by weight, very preferably 0.3 to 0.7% by weight, based in each case on the total amount of the coating composition.
Embodiment 55: curable coating composition according to any of the preceding embodiments, wherein the coating composition further comprises at least one organic solvent (E), selected from the group consisting of aliphatic hydrocarbons; aromatic hydrocarbons; ketones, such as acetone, methyl ethyl ketone and methyl amyl ketone; esters, such as ethyl acetate, butyl acetate, butylglycol acetate, pentyl acetate and ethyl ethoxy propionate; ethers; or mixtures thereof, preferably butyl acetate.
Embodiment 56: curable coating composition according embodiment 55, wherein the organic solvent (E) is present in a total amount of 15 to 60% by weight, preferably 20 to 50% by weight, more preferably 25 to 45% by weight, very preferably 30 to 40% by weight, based in each case on the total amount of the coating composition.
Embodiment 57: curable coating composition according to any of the embodiments claims, wherein the coating composition comprises water in a total amount of 0 to 1% by weight, preferably 0 to 0.5% by weight, very preferably 0 to 0.25% by weight, based in each case on the total amount of the coating composition.
Embodiment 58: curable coating composition according to any of the preceding embodiments, wherein the coating composition has a solids content of 30 to 80% by weight, preferably 40 to 75% by weight, very preferably 50 to 70% by weight, based in each case on the total amount of the coating composition.
Embodiment 59: curable coating composition according to any of the preceding embodiments, wherein the coating composition further comprises at least one additive (F), preferably in a total amount of up to 30% by weight, very preferably of up to 20% by weight, based in each case on the total amount of the coating composition.
Embodiment 60: curable coating composition according to any of the preceding embodiments, wherein the coating composition comprises less than 1 % by weight, especially 0 % by weight, of crosslinkers selected from melamine resins, blocked isocyanates, blocked polyisocyanates, unblocked isocyanates, unblocked polyisocyanates and mixtures thereof.
Embodiment 61: Kit-of-parts, comprising at least two separate containers C1 and C2, wherein
   - the container C1 contains at least one Michael donor (A) comprising at least one thiol group and at least one Michael acceptor (B) and the container C2 contains at least one catalyst (C), or
   - the container C1 contains at least one Michael donor comprising at least one thiol group (A), the container C2 contains at least one Michael acceptor (B) and the catalyst (C) is contained in container C1 and/or container C2, preferably in container C1,
   characterized in that the catalyst (C) has the general formula (I) 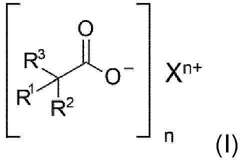 wherein
   - R¹, R² and R³: are, independently from each other, linear, branched or cyclic alkyl groups, aryl groups or aralkyl groups,
   - X: is selected from alkali metals, bismuth, zinc, zirconium or HN(R⁴)₃,
   - R⁴: is selected from C₁-C₁₀ alkyl groups or C₁-C₁₀ hydroxyalkyl groups and
   - n: is an integral number of 1 to 8.
Embodiment 62: Process for producing a multilayer coating (MC) on a substrate (S), the process comprising:
   (1) optionally applying a composition (Z1) to the substrate (S) and subsequent curing of the composition (Z1) to form a cured first coating layer (S1) on the substrate (S);
   (2) applying, directly to the cured first coating layer (S1) or the substrate (S),
      (a) an aqueous basecoat composition (bL2a) to form a basecoat layer (BL2a) or
      (b) at least two aqueous basecoat compositions (bL2-a) and (bL2-z) in direct sequence to form at least two basecoat layers (BL2-a) and (BL2-z) directly upon each other;
   (3) applying a coating composition (cc) according to embodiments 1 to 60 or a coating composition prepared from the kit-of-parts according to embodiment 61 directly to the coating layer (BL2a) or (BL2-z) to form a clear coat layer (CL),
   (4) jointly curing the basecoat layer (BL2a) and the clear coat layer (CL) or the at least two basecoat layers (BL2-a) and (BL2-z) and the clear coat layer (CL).
Embodiment 63: Process according to embodiment 62, wherein the substrate (S) is selected from metallic substrates, plastic substrates and substrates comprising metallic and plastic parts, preferably metallic substrates.
Embodiment 64: Process according to embodiment 62 or 63, wherein two aqueous basecoat compositions (bL2-a) and (bL2-z) are applied in direct sequence directly to the cured first coating layer (S1) to form two basecoat layers (BL2-a) and (BL2-z) directly upon each other.
Embodiment 65: Process according to any of embodiments 62 to 64, wherein the aqueous basecoat composition (bL2a) or at least one of the aqueous basecoat compositions (bL2-x), preferably all aqueous basecoat compositions (bL2-x), is a one-component coating composition.
Embodiment 66: Process according to any of embodiments 62 to 65, wherein the aqueous basecoat composition (bL2a) or at least one of the aqueous basecoat compositions (bL2-x), preferably all aqueous basecoat compositions (bL2-x), comprises at least one hydroxy-functional polymer as binder, said at least one hydroxy-functional polymer being selected from the group consisting of a polyurethane, a polyester, a polyacrylate, copolymers thereof and mixtures of these polymers.
Embodiment 67: Process according to embodiments 62 to 66, wherein the aqueous basecoat composition (bL2a) or at least one of the aqueous basecoat compositions (bL2-x), preferably all aqueous basecoat compositions (bL2-x), comprise at least one coloring and/or effect pigment.
Embodiment 68: Process according any of embodiments 62 to 67, wherein the curing in step (4) is performed at a temperature of 80 to 160 °C for a duration of 15 to 35 minutes.
Embodiment 69: A multilayer effect and/or color coating prepared according to the process according to any of embodiments 62 to 68.
Embodiment 70: Use of at least one compound (C) of formula (I) 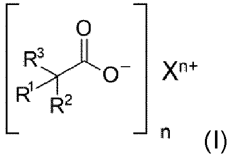 wherein
   - R¹, R² and R³: are, independently, linear, branched or cyclic alkyl groups, aryl groups or aralkyl groups,
   - X: is selected from alkali metals, bismuth, zinc, zirconium or HN(R⁴)₃,
   - R⁴: is selected from C₁-C₁₀ alkyl groups or C₁-C₁₀ hydroxyalkyl groups and
   - n: is an integral number of 1 to 8,
   as catalyst in the reaction between at least one Michael donor (A) comprising at least one thiol group and at least one Michael acceptor (B).

### Examples

The present invention will now be explained in greater detail using working examples, but the present invention is in no way limited to these working examples. Moreover, the terms "parts", "%" and "ratio" in the examples denote "parts by mass", "mass %" and "mass ratio" respectively unless otherwise indicated.

### A) Methods of determination:

### 1. Solids content (solids, nonvolatile fraction)

Unless otherwise indicated, the solids content, also referred to as solid fraction hereinafter, was determined in accordance with DIN EN ISO 3251:2008-06 at 130°C and 60 min, initial mass 1.0 g.

### 2. Acid number

The acid number is the amount of potassium hydroxide (KOH) in mg which is required for the neutralization of a 1g sample (unit: mg/g). The acid number was determined by titration according to DIN EN ISO 2114:2002-06 and based on 1g solid content of the samples.

### 3. Measurement of gloss

The gloss gives a first impression of the surface texture. The higher the degree of gloss, the more directed the light is reflected. Clear, smooth coating layers show a high degree of gloss, while rough, milky surfaces reflect the light more diffuse and thus have a lower degree of gloss. The gloss was determined following DIN EN ISO 2813:2015-02 and the measured value is given in gloss units [GU], said value being related to a standard (black, polished glass panel - 100 GU). The corresponding measuring device TRI-Gloss from BYK is calibrated to this standard before each measurement series. The gloss is measured, deviating from the norm, only at 60° angle in a threefold repetition and an average value is specified.

### 4. Print test

The print test provides a qualitative statement about the drying of the coating layer. 60 minutes after curing, the respective coated panel is placed on a commercial laboratory balance. By means of thumb pressure, the coating layer is then loaded for 20 s with a weight of 2 kg. The test is passed if the thumbprint is no longer visible shortly after the test and is then rated as "OK". Otherwise, the rating is "not OK".

### 5. Fingernail test

The fingernail test provides an indication of the degree of curing of the coating layer and is performed 60 minutes after curing of the respective coating layer. In this test, it the coating layer is penetrated with the fingernail. If penetration is possible, movement of the coating layer with the fingernail is checked. The evaluation is carried out on a scale of 0 to 5 as described below:

| **Scale** | **Degree of curing** |
|---|---|
| 0 | Hard, no penetration with fingernail possible |
| 1 | Nearly hard, fingernail penetrates into the coating layer |
| 2 | soft, coating layer can be moved with fingernail |
| 3 | Very soft, no print of fingernail visible |
| 4 | sticky, print of fingernail clearly visible |
| 5 | Wet, no curing detectable |

### 6. MEK test

This test provides an indication for the chemical resistance of the coating layer. A fabric strip is fixed to the MEK-sledge. The opening in the sledge is filled completely with MEK (methyl ethyl ketone) such that the fabric strip and the coating layer is fully wetted during the test. The sledge is then moved back and forth (same position, no pressure) until the coating layer is damaged or the sledge has performed 200 double strokes. If the coating layer is damaged, the number of strokes is stated, otherwise the number 400 is noted. The MEK test is performed 1h and 1d after curing of the respective coating layer

### 7. Pot life

This test provides an indication for the processing time and reactivity of the coating composition. The time elapsing from production of the coating composition until it is set is measured in minutes.

### B) Preparation of coating compositions

The Michael acceptor (B) and organic solvent are weighted in and mixed. Afterwards, the Michael donor (A) is added and mixing is continued. The neodecanoic acid or the respective catalyst is added and mixing is continued until a homogenous coating composition is obtained.

### C) Application of coating compositions

The coating composition obtained in point B) is applied using a 200 µm doctor blade onto a metal panel (type Gardobond 26s/6800/OC, Chemetall) and cured for 20 minutes at 140 °C.

### D) Preparation of catalyst

A three-neck glass flask equipped with a magnetic stirring bar and a reflux condenser is charged with equimolar amounts of the metal hydroxide and neodecanoic acid. In addition, the same amount of neodecanoic acid is added as a solvent. The reaction mixture is heated to 150 °C and stirred for 5 hours. Xylene is added as an entrainer to remove the water produced as a side product by using rotary evaporation. The metal content of the catalyst solution is determined by ICP-OES.

### E) Prepared coating compositions

Coating compositions were prepared as described in point B) using the components listed in Table 1.

**Table 1: Coating compositions comprising different catalysts (all amounts in % by wt.)**

| **Compound** | **C1** | **C2** | **I1*** | **I2*** | **I3*** | **I4*** |
|---|---|---|---|---|---|---|
| Organic solvent ¹⁾ | 38.30 | 38.06 | 38.24 | 37.90 | 38.00 | 37.87 |
| Michael donor (A) ²⁾ | 38.30 | 38.06 | 38.25 | 37.90 | 38.00 | 37.87 |
| Michael acceptor (B) ³⁾ | 23.40 | 23.25 | 23.86 | 23.15 | 23.31 | 23.13 |
| Neodecanoic acid | - | 0.64 | - | 0.84 | 0.393 | 0.56 |
| Catalyst (C1) ³⁾ | - | - | 0.09 | 0.09 | 0.03 | - |
| Catalyst (C2) ⁴⁾ | - | - | 0.07 | - | - | - |
| Catalyst (C3) ⁵⁾ | - | - | - | 0.12 | 0.26 | 0.26 |
| Catalyst (C4) ⁶⁾ | - | - | - | - | 0.10 | - |
| Catalyst (C5) ⁷⁾ | - | - | - | - | 0.06 | - |
| Catalyst (C6) ⁸⁾ | - | - | - | - | - | 0.19 |
| Catalyst (C7) ⁹⁾ | | | | | | 0.11 |

| | | | | | | |
|---|---|---|---|---|---|---|
| * inventive ¹⁾ Butyl acetate ²⁾ Michael donor of formula (III) with R⁵ = R⁶ = R⁷ = R⁸ = *-O-C(O)-(CH₂)_{q}-SH with q = 2, ²⁾ aliphatic urethane hexaacrylate polymer, M_{w} = 1200 (Sartomer CN 9215, Arkema) ³⁾ catalyst (C) of formula (I) with R¹ = methyl, R² = R³ = linear or branched C₃-C₅ alkyl groups (sum of all carbon atoms of residues R¹, R² and R³ is 8) and X = sodium in neodecanoic acid, sodium content = 5.9% ⁴⁾ zinc neodecanoate in neodecanoic acid, zinc content = 18% (K-Kat XK 633, King Industries) ⁵⁾ catalyst (C) of formula (I), R¹ = methyl, R² = R³ = linear or branched C₃-C₅ alkyl groups (sum of all carbon atoms of residues R¹, R² and R³ is 8), X = triethanolamine, triethanolamine content = 20% ⁶⁾ catalyst (C) of formula (I) with R1 = methyl, R2 and R3 = linear or branched C₃-C₅ alkyl groups (sum of all carbon atoms of residues R1, R2 and R3 is 8) and X = potassium in neodecanoic acid, potassium content = 10.6% ⁷⁾ zirconium neodecanoate in neodecanoic acid, zirconium content = 22.6% (DUROCT Zirkonium, DURA (Madrid)) ⁸⁾ lithium neodecanoate in neodecanoic acid, lithium content = 2% (DUROCT Lithium, DURA (Madrid)) ⁹⁾ bismuth neodecanoate in neodecanoic acid, bismuth content = 23% (K-Kat XK 651, King Industries) | | | | | | |

### F) Results for gloss, chemical resistance, degree of curing and pot life of cured coating compositions

Coating compositions prepared according to point E) were coated onto steel panels as described in point C). After curing, the gloss, dryness of coating layer, degree of curing, resistance to chemicals, pot life, pendulum damping and cupping were evaluated for each respective curing temperature. The obtained results are summarized in Table 2 .

**Table 2: Results after curing for 20 minutes at 140 °C**

| | **Gloss** | **Print-test** | **Fingernail** | **MEK 1h** | **MEK 1d** | **pot life** |
|---|---|---|---|---|---|---|
| C1 | 96.2 | OK | 0-1 | 54 | 47 | 0.5 h |
| C2 | 95.2 | OK | 0-1 | 50 | 54 | 0.5 h |
| I1 | 91.4 | OK | 0-1 | 127 | 231 | 10 h |
| I2 | 91.7 | OK | 0-1 | >400 | >400 | 0.2 h |
| I3 | 94.8 | OK | 0-1 | 276 | 400 | 1.2 h |
| I4 | 90.9 | OK | 0-1 | >400 | >400 | 3 h |

Use of the Michael donor (A) and the Michael acceptor (B) alone (composition C1) or in combination with neodecanoic acid (composition C2) does not result in a high chemical resistance. Thus, the crosslinking density of said compositions is rather low. The chemical resistance and therefore the crosslinking density can be increased significantly when using a combination of sodium neodecanoate and zinc neodecanoate as catalysts (composition 11). Even though a higher crosslinking density and thus reactivity is obtained with this catalyst mixture, the use of said catalyst mixture does surprisingly not decrease but significantly increase the pot life of the coating composition.

When using a mixture of sodium neodecanoate and triethanolamine neodecanoate as catalyst (composition I2) the chemical resistance can be improved even further as compared to inventive composition I1. However, the pot life is reduced due to the higher reactivity of this coating composition as compared to composition I1.

When using a mixture of 4 different catalysts (composition I3), a higher gloss can be obtained when compared to inventive compositions I1 and I2 without a significant negative influence on the chemical resistance obtained after 1 day. Use of said mixture also leads to an improved pot life when compared to inventive composition I2.

The use of a specific mixture of 3 different catalysts (composition I4) leads to a slight reduction in gloss but results in an excellent high chemical resistance after 1 hour. Additionally, this composition has a higher pot life than inventive compositions I2 and I3.

To sum up, the use of specific catalysts in combination with a Michael donor (A) containing thiol functional and a Michael acceptor (B) results in cured coating layers having a high gloss and a high chemical resistance as well as an acceptable pot life (inventive coating compositions I1 to I4). Said coating compositions can therefore be used as clear coatings in multilayer coating systems.

## Claims

1. Curable coating composition comprising:
(i) at least one Michael donor (A) comprising at least one thiol group,
(ii) at least one Michael acceptor (B) and
(iii) at least one catalyst (C) according to the general formula (I) 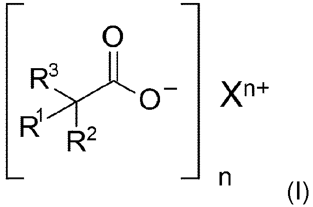 wherein
R¹, R² and R³ are, independently from each other, linear, branched or cyclic alkyl groups, aryl groups or aralkyl groups,
X is selected from alkali metals, bismuth, zinc, zirconium or HN(R⁴)₃,
R⁴ is selected from C₁-C₁₀ alkyl groups or C₁-C₁₀ hydroxyalkyl groups and
n is an integral number of 1 to 8.

2. Curable coating composition according to claim 1, wherein the composition comprises at least one Michael donor (A) of formula (III) 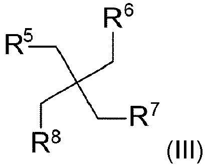 wherein
R⁵ to R⁸ are, independently from each other, selected from hydrogen, hydroxy, C₁-C₁₀ alkylene groups, C₁-C₁₀ thioalkylene groups, C₂-C₁₀ hydroxy alkylene groups, C₂-C₁₀ hydroxy thioalkylene groups and residues *-O-C(O)-(CH₂)_{q}-SH with the proviso that at least one of R⁵ to R⁸ contains a thiol group and
q is an integral number of 1 to 10.

3. Curable coating composition according to claim 2, wherein R⁵ to R⁸ are, independently from each other, a residue *-O-C(O)-(CH₂)_{q}-SH with q being an integral number of 2.

4. Curable coating composition according to any of the preceding claims, wherein the composition comprises the at least one Michael donor (A) in a total amount of 10 to 50% by weight, preferably 15 to 45% by weight, more preferably 18 to 30% by weight, very preferably 20 to 25% by weight, based in each case on the total weight of the composition.

5. Curable coating composition according to any of the preceding claims, wherein the at least one Michael acceptor (B) is selected from the group consisting of aliphatic urethane (meth)acrylate polymers, acrylic polymers comprising (meth)acrylate groups or mixtures thereof, preferably aliphatic urethane (meth)acrylate polymers.

6. Curable coating composition according to any of the preceding claims, wherein the coating composition comprises the at least one Michael acceptor (B) in a total amount of 20 to 55% by weight, preferably by 25 to 50% by weight, more preferably 28 to 45% by weight, very preferably 30 to 40% by weight, based in each case on the total weight of the coating composition.

7. Curable coating composition according to any of the preceding claims, wherein the residues R¹ and R² in formula (I) are, independently from each other, linear or branched C₃-C₅ alkyl groups and residue R³ is a methyl group, with the proviso that the sum of all carbon atoms of residues R¹, R² and R³ is 8 or wherein R¹ and R² in formula (I) are, independently from each other, phenyl groups and residue R³ is a C₁-C₁₂-alkyl group, preferably a C₆-C₁₀-alkyl group, especially a C₈-alkyl group.

8. Curable coating composition according to any of the preceding claims, wherein X in formula (I) is selected from the group consisting of lithium, sodium, potassium, bismuth, zinc, zirconium and HN(R⁴)₃ with R⁴ being *-(CH₂)₂-OH.

9. Curable coating composition according to any of the preceding claims, wherein n in formula (I) is an integral number of 1 to 4.

10. Curable coating composition according to any of the preceding claims, wherein the coating composition comprises the at least one catalyst (C) of formula (I) in a total amount of 0.05 to 6% by weight, preferably by 0.08 to 2.5% by weight, more preferably 0.1 to 1.5% by weight, very preferably 0.2 to 0.7% by weight, based in each case on the total weight of the coating composition.

11. Curable coating composition according to any of the preceding claims, wherein the composition comprises at least 2 different catalysts (C) of formula (I), preferably precisely 3 different catalysts (C) of formula (I) or precisely 4 different catalysts (C) of formula (I).

12. Kit-of-parts, comprising at least two separate containers C1 and C2, wherein
- the container C1 contains at least one Michael donor (A) comprising at least one thiol group and at least one Michael acceptor (B) and the container C2 contains at least one catalyst (C), or
- the container C1 contains at least one Michael donor comprising at least one thiol group (A), the container C2 contains at least one Michael acceptor (B) and the catalyst (C) is contained in container C1 and/or container C2, preferably in container C1,
**characterized in that** the catalyst (C) has the general formula (I) 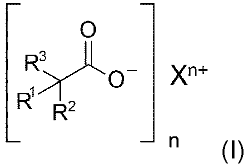 wherein
R¹, R² and R³ are, independently from each other, linear, branched or cyclic alkyl groups, aryl groups or aralkyl groups,
X is selected from alkali metals, bismuth, zinc, zirconium or HN(R⁴)₃,
R⁴ is selected from C₁-C₁₀ alkyl groups or C₁-C₁₀ hydroxyalkyl groups and
n is an integral number of 1 to 8.

13. Process for producing a multilayer coating (MC) on a substrate (S), the process comprising:
(1) optionally applying a composition (Z1) to the substrate (S) and subsequent curing of the composition (Z1) to form a cured first coating layer (S1) on the substrate (S);
(2) applying, directly to the cured first coating layer (S1) or the substrate (S),
(a) an aqueous basecoat composition (bL2a) to form a basecoat layer (BL2a) or
(b) at least two aqueous basecoat compositions (bL2-a) and (bL2-z) in direct sequence to form at least two basecoat layers (BL2-a) and (BL2-z) directly upon each other;
(3) applying a coating composition (cc) according to claims 1 to 11 or a coating composition prepared from the kit-of-parts according to claim 12 directly to the coating layer (BL2a) or (BL2-z) to form a clear coat layer (CL),
(4) jointly curing the basecoat layer (BL2a) and the clear coat layer (CL) or the at least two basecoat layers (BL2-a) and (BL2-z) and the clear coat layer (CL).

14. A multilayer effect and/or color coating prepared according to the process as claimed in claim 13.

15. Use of at least one compound (C) of formula (I) 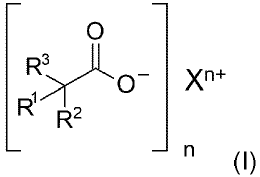 wherein
R¹, R² and R³ are, independently, linear, branched or cyclic alkyl groups, aryl groups or aralkyl groups,
X is selected from alkali metals, bismuth, zinc, zirconium or HN(R⁴)₃,
R⁴ is selected from C₁-C₁₀ alkyl groups or C₁-C₁₀ hydroxyalkyl groups and
n is an integral number of 1 to 8,
as catalyst in the reaction between at least one Michael donor (A) comprising at least one thiol group and at least one Michael acceptor (B).

## Patentansprüche

1. Härtbare Beschichtungszusammensetzung, umfassend:
(i) mindestens einen Michael-Donor (A) mit mindestens einer Thiolgruppe,
(ii) mindestens einen Michael-Akzeptor (B) und
(iii) mindestens einen Katalysator (C) gemäß der allgemeinen Formel (I) 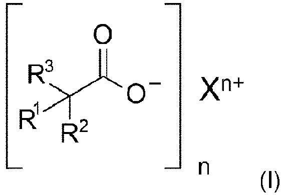 wobei
R¹, R² und R³ unabhängig voneinander für lineare, verzweigte oder cyclische Alkylgruppen, Arylgruppen oder Aralkylgruppen stehen,
X aus Alkalimetallen, Bismut, Zink, Zirconium oder HN(R⁴)₃ ausgewählt ist,
R⁴ aus C₁-C₁₀-Alkylgruppen oder C₁-C₁₀-Hydroxyalkylgruppen ausgewählt ist und
n für eine ganze Zahl von 1 bis 8 steht.

2. Härtbare Beschichtungszusammensetzung nach Anspruch 1, wobei die Zusammensetzung mindestens einen Michael-Donor (A) der Formel (III) 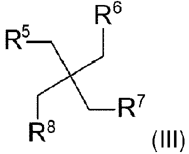 umfasst, wobei
R⁵ bis R⁸ unabhängig voneinander aus Wasserstoff, Hydroxy, C₁-C₁₀-Alkylengruppen, C₁-C₁₀-Thioalkylengruppen, C₂-C₁₀-Hydroxyalkylengruppen, C₂-C₁₀-Hydroxythioalkylengruppen und Resten *-O-C(O)-(CH₂)_{q}-SH ausgewählt sind, mit der Maßgabe, dass mindestens eines von R⁵ bis R⁸ eine Thiolgruppe enthält, und
q für eine ganze Zahl von 1 bis 10 steht.

3. Härtbare Beschichtungszusammensetzung nach Anspruch 2, wobei R⁵ bis R⁸ unabhängig voneinander für einen Rest *-O-C(O)- (CH₂)_{q}-SH stehen, wobei q für eine ganze Zahl mit einem Wert von 2 steht.

4. Härtbare Beschichtungszusammensetzung nach einem der vorhergehenden Ansprüche, wobei die Zusammensetzung den mindestens einen Michael-Donor (A) in einer Gesamtmenge von 10 bis 50 Gew.-%, vorzugsweise 15 bis 45 Gew.-%, weiter bevorzugt 18 bis 30 Gew.-%, besonders bevorzugt 20 bis 25 Gew.-%, jeweils bezogen auf das Gesamtgewicht der Zusammensetzung, umfasst.

5. Härtbare Beschichtungszusammensetzung nach einem der vorhergehenden Ansprüche, wobei der mindestens eine Michael-Akzeptor (B) aus der Gruppe bestehend aus aliphatischen Urethan(meth)acrylatpolymeren, Acrylatpolymeren mit (Meth)acrylatgruppen oder Mischungen davon, vorzugsweise aliphatischen Urethan(meth)acrylatpolymeren, ausgewählt ist.

6. Härtbare Beschichtungszusammensetzung nach einem der vorhergehenden Ansprüche, wobei die Beschichtungszusammensetzung den mindestens einen Michael-Akzeptor (B) in einer Gesamtmenge von 20 bis 55 Gew.-%, vorzugsweise 25 bis 50 Gew.-%, weiter bevorzugt 28 bis 45 Gew.-%, besonders bevorzugt 30 bis 40 Gew.-%, jeweils bezogen auf das Gesamtgewicht der Zusammensetzung, umfasst.

7. Härtbare Beschichtungszusammensetzung nach einem der vorhergehenden Ansprüche, wobei die Reste R¹ und R² in Formel (I) unabhängig voneinander für lineare oder verzweigte C₃-C₅-Alkylgruppen stehen und der Rest R³ für eine Methylgruppe steht, mit der Maßgabe, dass die Summe aller Kohlenstoffatome der Reste R¹, R² und R³ gleich 8 ist, oder wobei R¹ und R² in Formel (I) unabhängig voneinander für Phenylgruppen stehen und der Rest R³ für eine C₁-C₁₂-Alkylgruppe, vorzugsweise eine C₆-C₁₀-Alkylgruppe, insbesondere eine C₈-Alkylgruppe, steht.

8. Härtbare Beschichtungszusammensetzung nach einem der vorhergehenden Ansprüche, wobei X in Formel (I) aus der Gruppe bestehend aus Lithium, Natrium, Kalium, Bismut, Zink, Zirconium und HN(R⁴)₃ ausgewählt ist, wobei R⁴ für *-(CH₂)₂-OH steht.

9. Härtbare Beschichtungszusammensetzung nach einem der vorhergehenden Ansprüche, wobei n in Formel (I) für eine ganze Zahl von 1 bis 4 steht.

10. Härtbare Beschichtungszusammensetzung nach einem der vorhergehenden Ansprüche, wobei die Beschichtungszusammensetzung den mindestens einen Katalysator (C) der Formel (I) in einer Gesamtmenge von 0,05 bis 6 Gew.-%, vorzugsweise 0,08 bis 2,5 Gew.-%, weiter bevorzugt 0,1 bis 1,5 Gew.-%, besonders bevorzugt 0,2 bis 0,7 Gew.-%, jeweils bezogen auf das Gesamtgewicht der Beschichtungszusammensetzung, umfasst.

11. Härtbare Beschichtungszusammensetzung nach einem der vorhergehenden Ansprüche, wobei die Zusammensetzung mindestens 2 verschiedene Katalysatoren (C) der Formel (I), vorzugsweise genau 3 verschiedene Katalysatoren (C) der Formel (I) oder genau 4 verschiedene Katalysatoren (C) der Formel (I) umfasst.

12. Kit-of-parts, umfassend mindestens zwei separate Behälter C1 und C2, wobei
- der Behälter C1 mindestens einen Michael-Donor
(A) mit mindestens einer Thiolgruppe und mindestens einen Michael-Akzeptor (B) enthält und der Behälter C2 mindestens einen Katalysator (C) enthält oder
- der Behälter C1 mindestens einen Michael-Donor mit mindestens einer Thiolgruppe (A) enthält, der Behälter C2 mindestens einen Michael-Akzeptor (B) enthält und der Katalysator (C) in Behälter C1 und/oder Behälter C2, vorzugsweise in Behälter C1, enthalten ist,
**dadurch gekennzeichnet, dass** der Katalysator (C) die allgemeine Formel (I) 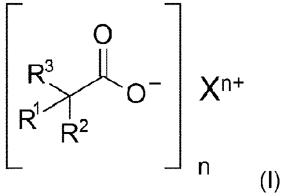 aufweist, wobei
R¹, R² und R³ unabhängig voneinander für lineare, verzweigte oder cyclische Alkylgruppen, Arylgruppen oder Aralkylgruppen stehen,
X aus Alkalimetallen, Bismut, Zink, Zirconium oder HN(R⁴)₃ ausgewählt ist,
R⁴ aus C₁-C₁₀-Alkylgruppen oder C₁-C₁₀-Hydroxyalkylgruppen ausgewählt ist und
n für eine ganze Zahl von 1 bis 8 steht.

13. Verfahren zur Herstellung einer mehrschichtigen Beschichtung (MC) auf einem Substrat (S), wobei das Verfahren Folgendes umfasst:
(1) gegebenenfalls Aufbringen einer Zusammensetzung (Z1) auf das Substrat (S) und anschließendes Härten der Zusammensetzung (Z1) zu Bildung einer gehärteten ersten Beschichtungsschicht (S1) auf dem Substrat (S) ;
(2) Aufbringen, direkt auf die gehärtete erste Beschichtungsschicht (S1) oder das Substrat (S),
(a) einer wässrigen Basislackzusammensetzung (bL2a) zur Bildung einer Basislackschicht (BL2a) oder
(b) mindestens zwei wässriger Basislackzusammensetzungen (bL2-a) und (bL2-z) in direkter Abfolge zur Bildung von mindestens zwei Basislackschichten (BL2-a) und (BL2-z)
(3) Aufbringen einer Beschichtungszusammensetzung (cc) nach den Ansprüchen 1 bis 11 oder einer aus dem Kit-of-parts nach Anspruch 12 hergestellten Beschichtungszusammensetzung direkt auf die Beschichtungsschicht (BL2a) bzw. (BL2-z) zur Bildung einer Klarlackschicht (CL),
(4) gemeinsames Härten der Basislackschicht (BL2a) und der Klarlackschicht (CL) bzw. der mindestens zwei Basislackschichten (BL2-a) und (BL2-z) und der Klarlackschicht (CL).

14. Mehrschichtige Effekt- und/oder Farbbeschichtung, hergestellt nach dem Verfahren nach Anspruch 13.

15. Verwendung mindestens einer Verbindung (C) der Formel (I) 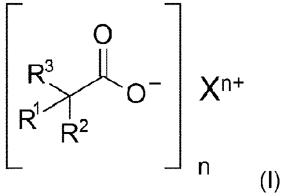 wobei
R¹, R² und R³ unabhängig voneinander für lineare, verzweigte oder cyclische Alkylgruppen, Arylgruppen oder Aralkylgruppen stehen,
X aus Alkalimetallen, Bismut, Zink, Zirconium oder HN(R⁴)₃ ausgewählt ist,
R⁴ aus C₁-C₁₀-Alkylgruppen oder C₁-C₁₀-Hydroxyalkylgruppen ausgewählt ist und
n für eine ganze Zahl von 1 bis 8 steht, als Katalysator bei der Reaktion zwischen mindestens einem Michael-Donor (A) mit mindestens einer Thiolgruppe und mindestens einem Michael-Akzeptor (B) .

## Revendications

1. Composition de revêtement durcissable comprenant :
(i) au moins un donneur de Michael (A) comprenant au moins un groupe thiol,
(ii) au moins un accepteur de Michael (B) et
(iii) au moins un catalyseur (C) selon la formule générale (I) 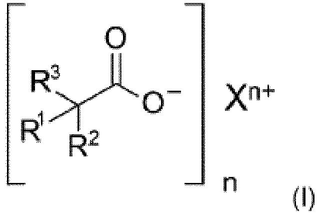
R¹, R² et R³ étant, indépendamment les uns des autres, des groupes alkyle linéaires, ramifiés ou cycliques, des groupes aryle ou des groupes aralkyle,
X étant choisi parmi des métaux alcalins, le bismuth, le zinc, le zirconium ou HN(R⁴)₃, R⁴ étant choisi parmi des groupes C₁₋₁₀ alkyle ou des groupes C₁₋₁₀ hydroxyalkyle et
n étant un nombre entier de 1 à 8.

2. Composition de revêtement durcissable selon la revendication 1, la composition comprenant au moins un donneur de Michael (A) de formule (III) 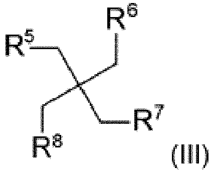
R⁵ à R⁸ étant, indépendamment les uns des autres, choisis parmi hydrogène, hydroxy, des groupes C₁₋₁₀ alkylène, des groupes C₁₋₁₀ thioalkylène, des groupes C₂₋₁₀ hydroxy alkylène, et des groupes C₂₋₁₀ hydroxy thioalkylène et des radicaux *-O-C(O)-(CH₂)_{q}-SH , à la condition qu'au moins l'un parmi R⁵ à R⁸ contienne un groupe thiol et
q étant un nombre entier de 1 à 10.

3. Composition de revêtement durcissable selon la revendication 2, R⁵ à R⁸ étant, indépendamment les uns des autres, un radical ***-O-C(O)-(CH₂)_{q}-SH** , q étant un nombre entier de 2.

4. Composition de revêtement durcissable selon l'une quelconque des revendications précédentes, la composition comprenant l'au moins un donneur de Michael (A) en une quantité totale de 10 à 50 % en poids, préférablement 15 à 45 % en poids, plus préférablement 18 à 30 % en poids, très préférablement 20 à 25 % en poids, sur la base en chaque cas du poids total de la composition.

5. Composition de revêtement durcissable selon l'une quelconque des revendications précédentes, l'au moins un accepteur de Michael (B) étant choisi dans le groupe constitué par des polymères de (méth)acrylate d'uréthane aliphatique, des polymères acryliques comprenant des groupes (méth)acrylate ou des mélanges correspondants, préférablement des polymères de (méth)acrylate d'uréthane aliphatique.

6. Composition de revêtement durcissable selon l'une quelconque des revendications précédentes, la composition de revêtement comprenant l'au moins un accepteur de Michael (B) en une quantité totale de 20 à 55 % en poids, préférablement de 25 à 50 % en poids, plus préférablement 28 à 45 % en poids, très préférablement 30 à 40 % en poids, sur la base en chaque cas du poids total de la composition de revêtement.

7. Composition de revêtement durcissable selon l'une quelconque des revendications précédentes, les radicaux R¹ et R² dans la formule (I) étant, indépendamment l'un de l'autre, des groupes alkyle linéaires ou ramifiés en C₃₋₅ et le radical R³ étant un groupe méthyle, à la condition que la somme de tous les atomes de carbone des radicaux R¹, R² et R³ soit 8 ou R¹ et R² dans la formule (I) étant, indépendamment l'un de l'autre, des groupes phényle et le radical étant un groupe alkyle en C₁₋₁₂, préférablement un groupe alkyle en C₆₋₁₀, notamment un groupe alkyle en C₈.

8. Composition de revêtement durcissable selon l'une quelconque des revendications précédentes, X dans la formule (I) étant choisi dans le groupe constitué par lithium, sodium, potassium, bismuth, zinc, zirconium et HN(R⁴)₃, R⁴ étant ***-(CH₂)₂-OH.**

9. Composition de revêtement durcissable selon l'une quelconque des revendications précédentes, n dans la formule (I) étant un nombre entier de 1 à 4.

10. Composition de revêtement durcissable selon l'une quelconque des revendications précédentes, la composition de revêtement comprenant l'au moins un catalyseur (C) de formule (I) en une quantité totale de 0,05 à 6 % en poids, préférablement de 0,08 à 2,5 % en poids, plus préférablement de 0,1 à 1,5 % en poids, très préférablement de 0,2 à 0,7 % en poids, sur la base en chaque cas du poids total de la composition de revêtement.

11. Composition de revêtement durcissable selon l'une quelconque des revendications précédentes, la composition comprenant au moins 2 catalyseurs (C) différents de formule (I), préférablement précisément 3 catalyseurs (C) différents de formule (I) ou précisément 4 catalyseurs (C) différents de formule (I).

12. Kit de pièces, comprenant au moins deux récipients séparés C1 et C2,
- le récipient C1 contenant au moins un donneur de Michael (A) comprenant au moins un groupe thiol et au moins un accepteur de Michael (B) et le récipient C2 contenant au moins un catalyseur (C), ou
- le récipient C1 contenant au moins un donneur de Michael comprenant au moins un groupe thiol (A), le récipient C2 contenant au moins un accepteur de Michael (B) et le catalyseur (C) étant contenu dans le récipient C1 et/ou le récipient C2, préférablement dans le récipient C1,
**caractérisé en ce que** le catalyseur (C) possède la formule générale (I) 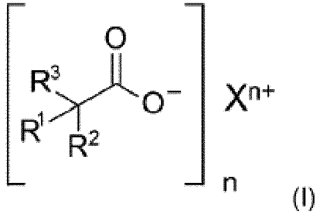
R¹, R² et R³ étant, indépendamment les uns des autres, des groupes alkyle linéaires, ramifiés ou cycliques, des groupes aryle ou des groupes aralkyle,
X étant choisi parmi des métaux alcalins, le bismuth, le zinc, le zirconium ou HN(R⁴)₃,
R⁴ étant choisi parmi des groupes C₁₋₁₀ alkyle ou des groupes C₁₋₁₀ hydroxyalkyle et
n étant un nombre entier de 1 à 8.

13. Procédé pour la production d'un revêtement multicouche (MC) sur un substrat (S), le procédé comprenant :
(1) éventuellement l'application d'une composition (Z1) sur le substrat (S) et le durcissement subséquent de la composition (Z1) pour former une première couche de revêtement durcie (S1) sur le substrat (S) ;
(2) l'application, directement sur la première couche de revêtement durcie (S1) ou le substrat (S),
(a) d'une composition aqueuse de revêtement de base (bL2a) pour former une couche de revêtement de base (BL2a) ou
(b) au moins deux compositions aqueuses de revêtement de base (bL2-a) et (bL2-z) en séquence directe pour former au moins deux couches de revêtement de base (BL2-a) et (BL2-z) directement l'une sur l'autre ;
(3) l'application d'une composition de revêtement (cc) selon les revendications 1 à 11 ou d'une composition de revêtement préparée à partir des kits de pièces selon la revendication 12 directement sur la couche de revêtement (BL2-a) ou (BL2-z) pour former une couche de revêtement transparente (CL),
(4) le durcissement de manière simultanée de la couche de revêtement de base (BL2-a) et de la couche de revêtement transparente (CL) ou des au moins deux couches de revêtement de base (BL2-a) et (BL2-z) et de la couche de revêtement transparente (CL).

14. Revêtement multicouche à effet et/ou de couleur préparé selon le procédé selon la revendication 13.

15. Utilisation d'au moins un composé (C) de formule (I) 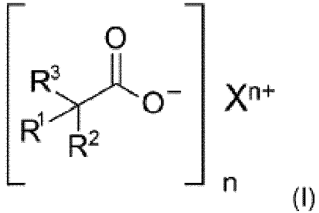
R¹, R² et R³ étant, indépendamment les uns des autres, des groupes alkyle linéaires, ramifiés ou cycliques, des groupes aryle ou des groupes aralkyle,
X étant choisi parmi des métaux alcalins, le bismuth, le zinc, le zirconium ou HN(R⁴)₃,
R⁴ étant choisi parmi des groupes C₁₋₁₀ alkyle ou des groupes C₁₋₁₀ hydroxyalkyle et
n étant un nombre entier de 1 à 8,
en tant que catalyseur dans la réaction entre au moins un donneur de Michael (A) comprenant au moins un groupe thiol et au moins un accepteur de Michael (B) .
